# EUROPEAN PATENT APPLICATION

(11) **EP 4 794 360 A1**
(43) Date of publication of application: **19.08.2026**
(21) Application number: 24887998.3
(22) Date of filing: 06.11.2024
(51) Int. Cl.: H04W 4/20

(54) **COMMUNICATION METHOD, AND APPARATUS**

(30) Priority: 07.11.2023 CN 202311485190
(71) Applicant: HUAWEI TECHNOLOGIES CO., LTD., Shenzhen 518129 (CN)
(72) Inventor: XU, Yishan, Shenzhen, Guangdong 518129 (CN); WANG, Yuan, Shenzhen, Guangdong 518129 (CN); ZHOU, Runze, Shenzhen, Guangdong 518129 (CN); HAN, Zhilin, Shenzhen, Guangdong 518129 (CN)
(74) Representative: MERH-IP Matias Erny Reichl Hoffmann Patentanwälte PartG mbB
(86) International application number: PCT/CN2024/130211
(87) International publication number: WO 2025/098387

(57) **Abstract**

This application provides a communication method and apparatus. The method includes: A reader obtains one or more first identifiers and time information corresponding to each of the one or more first identifiers, where the one or more first identifiers correspond to a first service requester. The reader broadcasts the one or more first identifiers based on the time information corresponding to each of the one or more first identifiers. This manner helps the reader trigger service inventory of the first service requester in a specific time period, instead of triggering service inventory of all service requesters within a coverage area of the reader, to reduce signaling overheads.

## Description

This application claims priority to Chinese Patent Application No. 202311485190.6, filed with the China National Intellectual Property Administration on November 7, 2023 and entitled "COMMUNICATION METHOD AND APPARATUS", which is incorporated herein by reference in its entirety.

### TECHNICAL FIELD

This application relates to the field of internet of things technologies, and in particular, to a communication method and apparatus.

### BACKGROUND

An ambient internet of things technology is an internet of things technology that harvests energy from environments without being equipped with or relying on batteries, to support data sensing, transmission, and distributed computing. The ambient internet of things technology can be applied to service inventory.

In ambient internet of things-based service inventory, a service requester sends an inventory instruction to a base station through a core network, so that the base station triggers random access of an internet of things device in a campus and reports identification information of the internet of things device, and the core network sends the identification information of the internet of things device to the service requester, to implement the service inventory. Alternatively, the service requester enables, in a pre-configuration manner, a network to periodically report an internet of things device that exists in a campus, so that the base station periodically triggers the internet of things device in the campus to report identification information, to implement the service inventory.

However, internet of things devices managed by different service requesters may exist in a same campus, and the different service requesters have different inventory service requirements. If a base station triggers service inventory, all internet of things devices managed by a plurality of service requesters in the campus may perform random access and report identification information. Consequently, a large amount of signaling is wasted.

### SUMMARY

Embodiments of this application provide a communication method and apparatus, to help reduce signaling overheads.

According to a first aspect, an embodiment of this application provides a communication method. The method may be performed by a reader. The reader herein may be a reader itself, or may be a processor, a module, a chip, a chip system, or the like that is in the reader and that implements the method. In the method, the reader obtains one or more first identifiers and time information corresponding to each of the one or more first identifiers, where the one or more first identifiers correspond to a first service requester. The reader broadcasts the one or more first identifiers based on the time information corresponding to each of the one or more first identifiers.

In this embodiment of this application, the reader broadcasts the one or more first identifiers based on the time information corresponding to each of the one or more first identifiers corresponding to the first service requester, to trigger service inventory of the first service requester or trigger an access procedure of an internet of things terminal corresponding to the first service requester. Compared with that the reader broadcasts all identifiers supported by the reader, this manner helps trigger the service inventory of the first service requester in a specific time period, instead of triggering service inventory of all service requesters within a coverage area of the reader, to reduce signaling overheads.

In an optional implementation, after broadcasting the one or more first identifiers, the reader may further perform the following steps: receiving identification information from a first internet of things device, where the identification information identifies the first internet of things device, and the first internet of things device is an internet of things device managed by the first service requester; and sending first information to a core network device, where the first information includes the identification information.

It can be learned that the reader may further obtain the identification information reported by the first internet of things device managed by the first service requester, and send the identification information to the core network device, to implement the service inventory of the first service requester.

In an optional implementation, that the reader obtains the one or more first identifiers and the time information corresponding to each of the one or more first identifiers includes: receiving, from the core network device, the one or more first identifiers and the time information corresponding to each of the one or more first identifiers.

It may be understood that the first service requester sends the one or more first identifiers and the time information corresponding to each of the one or more first identifiers to the core network device. The core network device sends, to the reader, the one or more first identifiers and the time information corresponding to each of the one or more first identifiers. Therefore, the reader receives, from the core network device, the one or more first identifiers and the time information corresponding to each of the one or more first identifiers.

In an optional implementation, the reader further obtains one or more second identifiers and time information corresponding to each of the one or more second identifiers, where the one or more second identifiers correspond to a second service requester; and broadcasts the one or more second identifiers based on the time information corresponding to each of the one or more second identifiers, where the time information corresponding to the first identifier is different from the time information corresponding to the second identifier.

Optionally, the one or more first identifiers are used to trigger the service inventory of the first service requester, and the one or more second identifiers are used to trigger service inventory of the second service requester.

It can be learned that the reader broadcasts, at different time, identifiers corresponding to different service requesters, so that service inventory of the different service requesters can be triggered at different time, instead of triggering the service inventory of the plurality of service requesters at the same time. This can reduce signaling overheads.

In an optional implementation, the first information further includes a third identifier and/or a timestamp at which the reader broadcasts the third identifier, the third identifier is a first identifier in response to which the first internet of things device sends the identification information, and the third identifier is one of the one or more first identifiers.

It can be learned that the identification information that identifies the first internet of things device is sent by the first internet of things device in response to the third identifier in the one or more first identifiers, and the reader sends, to the core network device by using the first information, the third identifier or the timestamp at which the reader broadcasts the third identifier. This manner helps the core network device determine, based on the third identifier or the timestamp at which the reader broadcasts the third identifier, the first service requester that manages the first internet of things device.

In an optional implementation, the first information further includes location information of the first internet of things device. This manner helps the core network device determine a location of the first internet of things device.

In an optional implementation, different first identifiers in the one or more first identifiers correspond to different time information. Therefore, time at which the reader broadcasts each of the one or more first identifiers varies.

In an optional implementation, the reader further broadcasts storage area information, where the storage area information represents a storage area that stores the one or more first identifiers. This manner helps the internet of things device determine, based on the storage area that stores the one or more first identifiers, whether to match or respond to a broadcast message including the one or more first identifiers.

In an optional implementation, the time information corresponding to the first identifier may be a broadcast time requirement, namely, a time requirement for broadcasting the first identifier.

Optionally, the time information for broadcasting the first identifier includes one or more of the following: sending time, a sending periodicity, valid time, a sending frequency, and a sending interval. The sending time may be one or more of a start time point, a time interval, an end time point, and sending duration.

In an optional implementation, the one or more first identifiers are closed access group identifiers CAG IDs, and the CAG ID is an identifier used by the internet of things device to connect to a private network through a specific area. This manner may enable the reader and the internet of things device to reuse an existing identifier, to reduce modifications to a protocol.

In an optional implementation, the one or more first identifiers correspond to an ambient internet of things service. Therefore, a service managed by the first service requester is the ambient internet of things service.

In an optional implementation, the reader may further perform the following steps: obtaining second information, where the second information indicates to update the first identifier corresponding to the first service requester; and updating, based on the second information, the first identifier corresponding to the first service requester.

In an optional implementation, the one or more first identifiers are identifiers used by an internet of things device to access a cell, identifiers of the first service requester, identifiers of the service of the first service requester, or group identifiers.

According to a second aspect, an embodiment of this application further provides a communication method. The method may be performed by a core network device. The core network device herein may be the core network device, or may be a processor, a module, a chip, a chip system, or the like that is in the core network device and that implements the method. In the method, a core network device receives first information sent by a reader, where the first information includes identification information, and the identification information identifies a first internet of things device. The core network device determines a first service requester that manages the first internet of things device. The core network device sends the identification information to the first service requester.

In this embodiment of this application, after receiving the identification information that identifies the first internet of things device, the core network device sends the identification information to the first service requester that manages the first internet of things device, to implement service inventory of the first service requester, that is, service inventory of a specific service requester, so that signaling overheads can be reduced.

In an optional implementation, the first information further includes a third identifier and/or a timestamp at which the reader broadcasts the third identifier, and the first service requester is a service requester corresponding to the third identifier.

In an optional implementation, when the first information further includes the third identifier and/or the timestamp at which the reader broadcasts the third identifier, that the core network device determines the first service requester that manages the first internet of things device includes: determining the first service requester based on the third identifier and/or the timestamp at which the reader broadcasts the third identifier.

In another optional implementation, that the core network device determines the first service requester that manages the first internet of things device includes: determining, from one or more service requesters based on subscription information of the first internet of things device, the first service requester that manages the first internet of things device, where the subscription information includes an association relationship between the first internet of things device and the first service requester.

In an optional implementation, when the first information includes the third identifier, and the third identifier is a CAG ID, before determining the first service requester that manages the first internet of things device, the core network device further allows the first internet of things device to access a network through a cell corresponding to the third identifier. It can be learned that the core network device may further perform access control on the first internet of things device based on the received CAG ID. The CAG ID is a CAI ID allowed by the first internet of things device.

In an optional implementation, the third identifier is a closed access group identifier CAG ID. This manner helps the reader and the internet of things device reuse an existing identifier, to reduce modifications to a protocol.

In an optional implementation, the third identifier corresponds to an ambient internet of things service. Therefore, a service managed by the first service requester is the ambient internet of things service.

In an optional implementation, the first information further includes location information of the first internet of things device. Therefore, the core network device further sends the location information of the first internet of things device to the first service requester. This manner helps the first service requester determine a location of the first internet of things device.

In an optional implementation, the third identifier is an identifier used by the internet of things device to access the cell, an identifier of the first service requester, an identifier of the service of the first service requester, or a group identifier.

According to a third aspect, an embodiment of this application further provides a communication method. The method may be performed by a first service requester. The first service requester herein may be the first service requester, or may be a processor, a module, a chip, a chip system, or the like that is in the first service requester and that implements the method. In this method, the first service requester sends one or more first identifiers corresponding to the first service requester, and time information corresponding to each of the one or more first identifiers. The first service requester receives identification information from a core network device, where the identification information identifies a first internet of things device, the identification information is sent by the first internet of things device in response to a third identifier broadcast by a reader, the third identifier is one of the one or more first identifiers, and the first internet of things device is an internet of things device managed by the first service requester.

In this embodiment of this application, the first service requester sends the one or more first identifiers corresponding to the first service requester, and the time information corresponding to each of the one or more first identifiers, and receives the identification information that identifies the first internet of things device. The first internet of things device is the internet of things device managed by the first service requester. Therefore, service inventory of the first service requester can be implemented.

In an optional implementation, different first identifiers in the one or more first identifiers correspond to different time information. This manner helps the reader broadcast different first identifiers at different time.

In an optional implementation, the time information includes one or more of the following: sending time, a sending periodicity, valid time, a sending frequency, and a sending interval. The sending time may be one or more of a start time point, a time interval, an end time point, and sending duration.

In an optional implementation, the one or more first identifiers are closed access group identifiers CAG IDs, and the CAG ID is an identifier used by the internet of things device to connect to a private network through a specific area. This manner may enable the reader and the internet of things device to reuse an existing identifier, to reduce modifications to a protocol.

In an optional implementation, the one or more first identifiers correspond to an ambient internet of things service, in other words, a service managed by the first service requester is the ambient internet of things service.

In an optional implementation, the third identifier is an identifier used by the internet of things device to access a cell, an identifier of the first service requester, an identifier of the service of the first service requester, or a group identifier.

According to a fourth aspect, an embodiment of this application further provides a communication method. The method may be performed by a reader. The reader herein may be the reader, or may be a processor, a module, a chip, a chip system, or the like that is in the reader and that implements the method. In the method, the reader obtains one or more access group identifiers and time information corresponding to the one or more access group identifiers; and the reader broadcasts the one or more access group identifiers based on the time information corresponding to the one or more access group identifiers.

In this embodiment of this application, the reader broadcasts the one or more access group identifiers based on the time information corresponding to the one or more access group identifiers, so that a plurality of internet of things devices initiate registration procedures to a network at different time or in different time periods based on access group identifiers obtained by the plurality of internet of things devices. Compared with that the plurality of internet of things devices initiate the registration procedures to the network at the same time or in a same time period, this manner can reduce network congestion.

In an optional implementation, that the reader broadcasts the one or more access group identifiers based on the time information corresponding to the one or more access group identifiers may be broadcasting a part or all of the access group identifiers based on time information corresponding to the part or all of the one or more access group identifiers.

In an optional implementation, when broadcasting the one or more access group identifiers based on the time information corresponding to the one or more access group identifiers, the reader further broadcasts a first tracking area identity TAI corresponding to the reader. For example, when broadcasting an access group identifier a based on time information of the access group identifier a, the reader further broadcasts the first TAI; and when broadcasting an access group identifier b based on time information of the access group identifier b, the reader further broadcasts the first TAI. This implementation helps a plurality of internet of things devices moving to an area corresponding to the first TAI initiate, based on access group identifiers obtained by the plurality of internet of things devices, registration procedures to the network at different time or in different time periods. Compared with that the plurality of internet of things devices moving to the area corresponding to the first TAI initiate the registration procedures to the network at the same time or at a same time point, this implementation can reduce network congestion.

In an optional implementation, after broadcasting the one or more access group identifiers, the reader may further perform the following steps: receiving a registration request from a second internet of things device, where the registration request includes identification information of the second internet of things device, and the second internet of things device is an internet of things device that obtains a first access group identifier currently broadcast by the reader, or is an internet of things device that switches to the area corresponding to the first TAI and that obtains the first access group identifier currently broadcast by the reader; and sending the identification information of the second internet of things device to a core network device. The first access group identifier is one of the one or more access group identifiers.

It can be learned that in this implementation, the second internet of things device that obtains the first access group identifier currently broadcast by the reader may send the registration request to the reader, to request for registration and network access; or the second internet of things device that switches to the area corresponding to the first TAI and that obtains the first access group identifier currently broadcast by the reader may send the registration request to the reader, to request for registration and network access. Further, the reader sends the identification information of the second internet of things device to the core network device, so that the core network device performs security verification on the second internet of things device, to determine whether to allow the second internet of things device to access the network.

In an optional implementation, that the reader obtains the one or more access group identifiers and the time information corresponding to the one or more access group identifiers includes: receiving, from the core network device, the one or more access group identifiers and the time information corresponding to the one or more access group identifiers.

It can be learned that in this implementation, the one or more access group identifiers and the time information corresponding to the one or more access group identifiers may be sent by the core network device to the reader, so that the reader may broadcast different access group identifiers based on time information corresponding to the different access group identifiers, to facilitate different internet of things devices to initiate registration procedures at different time or in different time periods, to reduce network congestion.

In another optional implementation, the one or more access group identifiers and the time information corresponding to the one or more access group identifiers are configured for the reader. In this manner, that the reader obtains the one or more access group identifiers and the time information corresponding to the one or more access group identifiers may be understood as: obtaining, by using configuration information, the one or more access group identifiers and the time information corresponding to the one or more access group identifiers. The configuration information may be preconfigured by the core network device for the reader.

In an optional implementation, different access group identifiers in the one or more access group identifiers correspond to different time information. Therefore, the reader broadcasts different access group identifiers in the one or more access group identifiers at different time. This helps different physical network devices initiate registration procedures to the network at different time or in different time periods based on access group identifiers obtained by the physical network devices.

In an optional implementation, the time information corresponding to the access group identifier may be a broadcast time requirement, namely, a time requirement for broadcasting the access group identifier.

In an optional implementation, the time information for broadcasting the access group identifier includes one or more of the following: sending time, a sending periodicity, valid time, a sending frequency, and a sending interval. The sending time may be one or more of a start time point, a time interval, an end time point, and sending duration. It can be learned that the time information corresponding to the access group identifier may be presented in a plurality of forms.

In an optional implementation, the one or more access group identifiers are access identifiers, for example, may be CAG IDs, used when an internet of things device accesses a cell. This manner may enable the reader and the internet of things device to reuse an existing access identifier, to reduce modifications to a protocol.

In an optional implementation, the reader may further perform the following operation: sending TAI update information to the second internet of things device, where the TAI update information includes an identifier of the first TAI. In this manner, when the second internet of things device is still in the area corresponding to the first TAI, the second internet of things device does not need to frequently initiate a registration procedure to the network, but initiates the registration procedure to the network only after the second internet of things device moves out of the area corresponding to the first TAI, to reduce power consumption of the second internet of things device.

According to a fifth aspect, an embodiment of this application further provides a communication method. The method may be performed by an internet of things device. The internet of things device herein may be the internet of things device, or may be a processor, a module, a chip, a chip system, or the like that is in the internet of things device and that implements the method. In the method, a second internet of things device receives a first access group identifier broadcast by a reader, and the second internet of things device is an internet of things device that obtains the first access group identifier. The second internet of things device sends a registration request to the reader, where the registration request includes identification information of the second internet of things device.

It can be learned that in this embodiment of this application, after receiving the first access group identifier broadcast by the reader, the internet of things device that obtains the first access group identifier may initiate a registration procedure to the reader. Compared with that a plurality of internet of things devices initiate registration procedures to the reader at the same time or in a same time period because the internet of things devices may initiate the registration procedures to the reader at any moment, this manner can reduce network congestion.

In an optional implementation, the second internet of things device further receives a first TAI broadcast by the reader. In this manner, the second internet of things device may be an internet of things device that switches from another TAI to the first TAI and that obtains the first access group identifier. In this manner, a plurality of internet of things devices that switch from other TAIs to the first TAI initiate registration procedures to the network only when the plurality of internet of things devices obtain the access group identifier currently broadcast by the reader. Compared with that the plurality of internet of things devices that switch from the other TAIs to the first TAI directly initiate the registration procedures to the network at a same time or in a same time period, this manner can reduce network congestion.

In an optional implementation, that the second internet of things device obtains the first access group identifier may be understood as that the first access group identifier is preconfigured for the second internet of things device.

In another optional implementation, that the second internet of things device obtains the first access group identifier may be understood as that a core network device sends the first access group identifier to the second internet of things device through the reader.

It can be learned that the first access group identifier obtained by the second internet of things device may be preconfigured, or may be received from the core network device.

According to a sixth aspect, an embodiment of this application further provides a communication apparatus. The communication apparatus has some or all functions of the reader according to the first aspect or the fourth aspect, some or all functions of the core network device according to the second aspect, some or all functions of the first service requester according to the third aspect, or some or all functions of the internet of things device according to the fifth aspect. For example, the function of the communication apparatus may have a function in some or all of embodiments of the reader in the first aspect of embodiments of this application, or may have a function of independently implementing any one of embodiments of this application. The function may be implemented by hardware, or may be implemented by hardware executing corresponding software. The hardware or the software includes one or more units or modules corresponding to the function.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus includes a processing unit and a communication unit, the apparatus is applied to a reader, and the communication unit is configured to send and receive a signal/signaling.

The processing unit is configured to obtain one or more first identifiers and time information corresponding to each of the one or more first identifiers, where the one or more first identifiers correspond to a first service requester.

The processing unit is further configured to broadcast the one or more first identifiers based on the time information corresponding to each of the one or more first identifiers.

In addition, for another optional implementation of the communication apparatus in this aspect, refer to related content of the first aspect. Details are not described herein again.

In another implementation, the communication apparatus includes a processing unit and a communication unit, and the apparatus is applied to a core network device.

The communication unit is configured to receive first information sent by a reader, where the first information includes identification information, and the identification information identifies a first internet of things device.

The processing unit is configured to determine a first service requester that manages the first internet of things device.

The communication unit is further configured to send the identification information to the first service requester.

In addition, for another optional implementation of the communication apparatus in this aspect, refer to related content of the second aspect. Details are not described herein again.

In still another implementation, the communication apparatus includes a processing unit and a communication unit, the apparatus is applied to a first service requester, and the processing unit is configured to process a signal/signaling.

The communication unit is configured to send one or more first identifiers corresponding to the first service requester, and time information corresponding to each of the one or more first identifiers.

The communication unit is further configured to receive identification information, where the identification information identifies a first internet of things device, the identification information is sent by the first internet of things device in response to a third identifier broadcast by a reader, the third identifier is one of the one or more first identifiers, and the first internet of things device is an internet of things device managed by the first service requester.

In addition, for another optional implementation of the communication apparatus in this aspect, refer to related content of the third aspect. Details are not described herein again.

In still another implementation, the communication apparatus includes a processing unit and a communication unit, the apparatus is applied to a reader, and the communication unit is configured to send and receive a signal/signaling.

The processing unit is configured to obtain one or more access group identifiers and time information corresponding to the one or more access group identifiers.

The processing unit is further configured to broadcast the one or more access group identifiers based on the time information corresponding to the one or more access group identifiers.

In addition, for another optional implementation of the communication apparatus in this aspect, refer to related content of the fourth aspect. Details are not described herein again.

In still another implementation, the communication apparatus includes a processing unit and a communication unit, the apparatus is applied to an internet of things device, and the processing unit is configured to process a signal/signaling.

The communication unit is configured to receive a first access group identifier broadcast by a reader, where the communication apparatus is an internet of things device that obtains the first access group identifier.

The communication unit is further configured to send a registration request to the reader, where the registration request includes identification information of a second internet of things device.

In addition, for another optional implementation of the communication apparatus in this aspect, refer to related content of the fifth aspect. Details are not described herein again.

In an implementation, the communication apparatus includes a processor and a transceiver, the apparatus is applied to a reader, and the transceiver is configured to send and receive a signal/signaling.

The processor is configured to obtain one or more first identifiers and time information corresponding to each of the one or more first identifiers, where the one or more first identifiers correspond to a first service requester.

The processor is further configured to broadcast the one or more first identifiers based on the time information corresponding to each of the one or more first identifiers.

In addition, for another optional implementation of the communication apparatus in this aspect, refer to related content of the first aspect. Details are not described herein again.

In another implementation, the communication apparatus includes a processor and a transceiver, and the apparatus is applied to a core network device.

The transceiver is configured to receive first information sent by a reader, where the first information includes identification information, and the identification information identifies a first internet of things device.

The processor is further configured to determine a first service requester that manages the first internet of things device.

The transceiver is further configured to send the identification information to the first service requester.

In addition, for another optional implementation of the communication apparatus in this aspect, refer to related content of the second aspect. Details are not described herein again.

In still another implementation, the communication apparatus includes a processor and a transceiver, the apparatus is applied to a first service requester, and the processor is configured to process a signal/signaling.

The transceiver is configured to send one or more first identifiers corresponding to the first service requester, and time information corresponding to each of the one or more first identifiers.

The transceiver is further configured to receive identification information, where the identification information identifies a first internet of things device, the identification information is sent by the first internet of things device in response to a third identifier broadcast by a reader, the third identifier is one of the one or more first identifiers, and the first internet of things device is an internet of things device managed by the first service requester.

In addition, for another optional implementation of the communication apparatus in this aspect, refer to related content of the third aspect. Details are not described herein again.

In still another implementation, the communication apparatus includes a processor and a transceiver, the apparatus is applied to a reader, and the transceiver is configured to send and receive a signal/signaling.

The processor is configured to obtain one or more access group identifiers and time information corresponding to the one or more access group identifiers.

The processor is further configured to broadcast the one or more access group identifiers based on the time information corresponding to the one or more access group identifiers.

In addition, for another optional implementation of the communication apparatus in this aspect, refer to related content of the fourth aspect. Details are not described herein again.

In still another implementation, the communication apparatus includes a processor and a transceiver, the apparatus is applied to an internet of things device, and the processor is configured to process a signal/signaling.

The transceiver is configured to receive a first access group identifier broadcast by a reader, where the communication apparatus is an internet of things device that obtains the first access group identifier.

The transceiver is further configured to send a registration request to the reader, where the registration request includes identification information of a second internet of things device.

In addition, for another optional implementation of the communication apparatus in this aspect, refer to related content of the fifth aspect. Details are not described herein again.

In another implementation, the communication apparatus is a chip or a chip system. The processing unit may alternatively be represented as a processing circuit or a logic circuit. The communication unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency sending and receiving. The foregoing devices may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of an integrated circuit technology, increasingly more devices may be integrated on a same chip. For example, the digital baseband processor and a plurality of application processors (for example, but not limited to, a graphics processing unit and a multimedia processor) may be integrated on a same chip. Such a chip may be referred to as a system on a chip (system on a chip, SoC). Whether the devices are independently disposed on different chips or integrated and disposed on one or more chips usually depends on a requirement of a product design. This embodiment of this application imposes no limitation on specific implementations of the foregoing devices.

According to a seventh aspect, an embodiment of this application further provides a processor, configured to perform the foregoing methods. In a process of performing these methods, a process of sending the foregoing information and a process of receiving the foregoing information in the foregoing methods may be understood as a process of outputting the foregoing information by the processor and a process of receiving the foregoing input information by the processor. When outputting the foregoing information, the processor outputs the foregoing information to a transceiver, so that the transceiver transmits the foregoing information. After the information is output by the processor, other processing may further need to be performed on the information before the information arrives at the transceiver. Similarly, when the processor receives the foregoing input information, the transceiver receives the foregoing information, and inputs the foregoing information to the processor. Further, after the transceiver receives the foregoing information, other processing may need to be performed on the foregoing information before the foregoing information is input to the processor.

Unless otherwise specified, operations such as sending and receiving related to the processor may be more generally understood as operations such as outputting, receiving, and inputting of the processor if the operations do not conflict with actual functions or internal logic of the operations in related descriptions, instead of sending and receiving operations directly performed by a radio frequency circuit and an antenna.

In an implementation process, the processor may be a processor specially configured to perform the methods, or a processor, for example, a general-purpose processor, that executes computer instructions in a memory to perform the methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to an eighth aspect, an embodiment of this application further provides a communication system. The system may include a reader and a core network device. In another possible design, the system may further include another device that interacts with the reader and the core network device, for example, further include an internet of things device and a service requester.

According to a ninth aspect, an embodiment of this application provides a computer-readable storage medium, configured to store instructions. When the instructions are run by a computer, the method according to any one of the first aspect to the fifth aspect is implemented.

According to a tenth aspect, an embodiment of this application further provides a computer program product including instructions. When the computer program product runs on a computer, the method according to any one of the first aspect to the fifth aspect is implemented.

According to an eleventh aspect, an embodiment of this application provides a chip system. The chip system includes a processor. The processor is configured to invoke a program or instructions to implement or support a reader in implementing a function in the first aspect or the fourth aspect, implement or support a core network device in implementing a function in the second aspect, implement or support a first service requester in implementing a function in the third aspect, or implement or support an internet of things device in implementing a function in the fifth aspect, for example, determining or processing at least one of data or information in the foregoing method. In a possible design, the chip system further includes a communication interface, and the communication interface is configured to obtain a program or instructions. In a possible design, the chip system further includes a memory. The memory is configured to store program instructions and data that are necessary for a terminal. The chip system may include a chip, or may include a chip and another discrete device.

According to a twelfth aspect, an embodiment of this application provides a communication apparatus, including a processor, configured to execute a computer program or executable instructions stored in a memory. When the computer program or the executable instructions are executed, the apparatus is caused to perform the method according to the possible implementations of the first aspect to the fifth aspect.

In a possible implementation, the processor and the memory are integrated together. In another possible implementation, the memory is located outside the communication apparatus.

For beneficial effects of the sixth aspect to the twelfth aspect, refer to the beneficial effects of the first aspect to the fifth aspect. Details are not described herein again.

### BRIEF DESCRIPTION OF DRAWINGS

FIG. 1 is a diagram of a system architecture;
FIG. 2 is a diagram of a passive internet of things service;
FIG. 3 is a diagram of another passive internet of things service;
FIG. 4 is a diagram of still another passive internet of things service;
FIG. 5 is a diagram of SNPN services and PLMN/PNI-NPN services;
FIG. 6 is a diagram of a registration procedure of a terminal device;
FIG. 7 is a diagram of a service inventory procedure of a tag;
FIG. 8 is a schematic flowchart of a communication method according to an embodiment of this application;
FIG. 9 is an interaction diagram of another communication method according to an embodiment of this application;
FIG. 10 is an interaction diagram of still another communication method according to an embodiment of this application;
FIG. 11 is an interaction diagram of still another communication method according to an embodiment of this application;
FIG. 12 is an interaction diagram of still another communication method according to an embodiment of this application;
FIG. 13 is an interaction diagram of still another communication method according to an embodiment of this application;
FIG. 14 is a diagram of a structure of a communication apparatus according to an embodiment of this application; and
FIG. 15 is a diagram of a structure of another communication apparatus according to an embodiment of this application.

### DESCRIPTION OF EMBODIMENTS

The following clearly and completely describes the technical solutions in embodiments of this application with reference to the accompanying drawings in embodiments of this application.

To better understand embodiments of this application, the following first describes a system architecture in embodiments of this application.

Embodiments of this application can be applied to a 4th generation (4th generation, 4G) mobile communication system, a 5th generation (5th generation, 5G) mobile communication system, a long term evolution (long term evolution, LTE) communication system, a non-terrestrial network (non-terrestrial network, NTN) communication system, vehicle to everything (vehicle to everything, V2X), long term evolution-vehicle (long term evolution-vehicle, LTE-V), machine-type communications (machine-type communications, MTC), an internet of things (internet of things, IoT), machine to machine (machine to machine, M2M), long term evolution-machine to machine (LTE-machine to machine, LTE-M), a future mobile communication system, or the like.

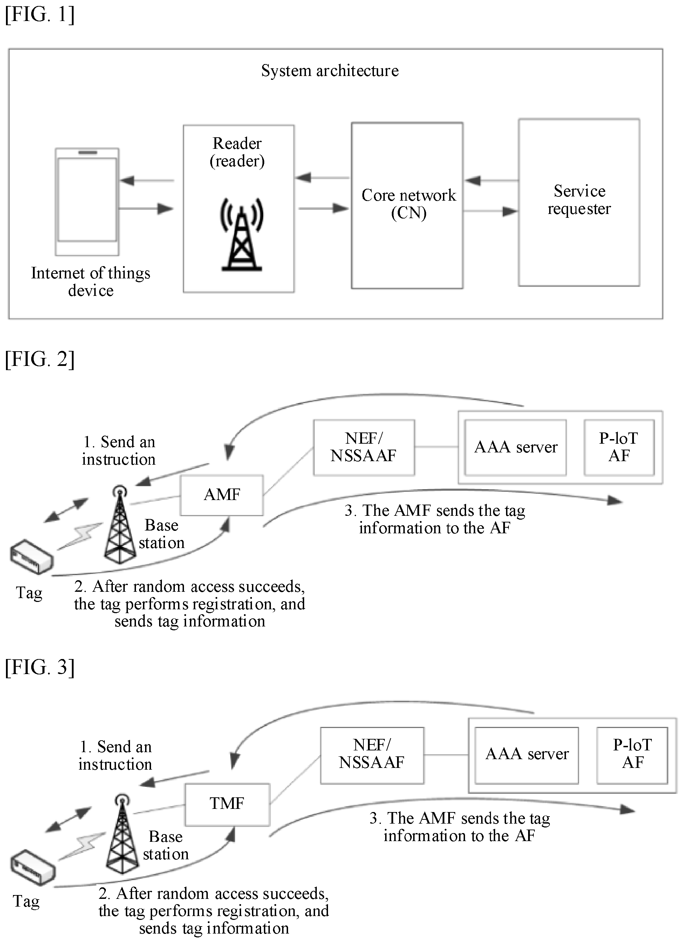

FIG. 1 is a diagram of a system architecture according to an embodiment of this application. As shown in FIG. 1, the system architecture includes an internet of things device (internet of things device, IoT device), a reader (reader), a core network (core network, CN), and a service requester. The internet of things device may be an ambient internet of things device (Ambient IoT device), may be a passive internet of things device (passive IoT device), or may be a non-ambient internet of things device. This is not limited in embodiments of this application. The internet of things device may be in a tag form, a sensor form, or the like; or may be in any other terminal form. This is not limited in embodiments of this application. Other terminal forms may be, for example, a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a vehicle-mounted terminal, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal, and the like. The internet of things device may also be referred to as an internet of things terminal. A name of the internet of things device is not limited in embodiments of this application. The internet of things device may be fixed or mobile. It may be understood that all or some functions of the internet of things device in this application may alternatively be implemented by using a software function running on hardware, or may be implemented by using a virtualization function instantiated on a platform (for example, a cloud platform).

The reader may be an access network device. Alternatively, the reader may be a terminal device, for example, a terminal device in another form like a mobile phone, an IoT device, or a handheld reader. A form of the reader is not limited in embodiments of this application. A name of the reader is also not limited in embodiments of this application. The reader may alternatively be named a reader/writer or another name, in other words, it may be understood as that the reader/writer and the reader are interchanged. The reader/writer has a function related to the reader in embodiments of this application. For example, the reader/writer has a function of performing an operation (for example, a tag information obtaining operation, a stocktaking operation, a read operation, a write operation, a disable operation, or a message exchange operation with a tag) on an internet of things device (for example, a tag) in this application, and has functions of obtaining charging related information and/or charging information, and sending the charging information to a charging function (charging function, CHF). The reader may perform non-contact bidirectional data communication with the internet of things device in a wireless radio frequency manner, for example, read and write an electronic tag (tag) or a radio frequency card in a wireless radio frequency manner, to identify a target and exchange data. The reader and the internet of things device work in two manners. In one manner, when the internet of things device enters an effective identification range of the reader, the internet of things device receives a radio frequency signal sent by the reader, and sends, by using energy harvested from an induced current, information stored in a chip. In the other manner, the internet of things device stores some electric energy through solar energy or another manner, so that the internet of things device can actively send a signal of a specific frequency. The reader receives and decodes information from the internet of things device, and sends decoded information to a central information system for related data processing.

For example, the access network device includes but is not limited to: a next generation NodeB (next generation NodeB, gNB) in a 5G communication system, an evolved NodeB (evolved NodeB, eNB), a next generation evolved NodeB (next generation eNB, ng-eNB), a wireless backhaul device, a radio network controller (radio network controller, RNC), a NodeB (NodeB, NB), a home base station (home evolved NodeB, HeNB) or (home NodeB, HNB), a baseband unit (baseband unit, BBU), a transmitting and receiving point (transmitting and receiving point, TRP), a transmitting point (transmitting point, TP), a mobile switching center, a device that undertakes a base station function in device-to-device (device-to-device, D2D), V2X, or M2M communication, a device, a pole site, a macro site, a micro base station, a small cell (for example, referred to as a Lampsite), an integrated access and backhaul node (integrated access and backhaul node, IAB node), or the like. The access network device may further include a central unit (centralized unit, CU) and a distributed unit (distributed unit, DU) in a cloud access network (cloud radio access network, C-RAN) system, or a network device in an NTN communication system, that is, the network device may be deployed on a high-altitude platform or a satellite. This is not specifically limited in embodiments of this application.

The core network may include one or more core network devices (the core network device may also be referred to as a core network element, a core network function, or a core network function network element). In an optional implementation, the core network may include a plurality of core network devices, for example, an access and mobility management function (access and mobility management function, AMF), an internet of things terminal management function, a user plane function (user plane function, UPF), a session management function (session management function, SMF), a unified data management (unified data management, UDM), a user data repository (user data repository, UDR), a network exposure function (network exposure function, NEF), a network slice specific authentication and authorization function (network slice specific authentication and authorization function, NSSAAF), an application function (application function, AF), a network slice selection function (network slice selection function, NSSF), and a network slice admission control (network slice admission control function, NSACF). The AMF may also be referred to as an access and mobility management device, an access and mobility management function entity, an access and mobility management function network element, a mobility management device, a mobility management network element, or a mobility management entity.

The device may be configured to manage access control and mobility of user equipment. During actual application, the device includes an access and mobility management function in a mobility management entity (mobility management entity, MME) in a network framework in LTE and is added with an access management function, and may be specifically responsible for user equipment registration, mobility management, a tracking area update procedure, reachability detection, session management network element selection, mobility state transition management, and the like. For example, in 5G, the access and mobility management network element may be an AMF network element. In future communication, for example, in 6G, the access and mobility management network element may still be an AMF network element, or may have another name. This is not limited in this application. When the access and mobility management network element is an AMF network element, the AMF may provide an Namf service.

The internet of things terminal management function may be a tag management function (tag management function, TMF), or the internet of things terminal management function may be an ambient energy harvesting internet of things management function (ambient IoT management function, AIMF). The internet of things terminal management function is configured to perform transmission of service data of an internet of things device or management of the internet of things device (or a tag). For example, when the internet of things device is a tag, the internet of things terminal management function may perform transmission and/or management of service data of the tag. A name of the internet of things terminal management function (or referred to as a tag management function) is not limited in this application, and may be another name.

The UPF (which may also be referred to as a user plane device) may be responsible for forwarding and receiving user data in user equipment. The UPF may receive user data from a data network, and transmit the user data to the user equipment through an access network element; or the UPF may receive user data from the user equipment through an access network element, and forward the user data to a data network. A transmission resource and a scheduling function, in the UPF, that serves the user equipment are managed and controlled by a session management function network element.

The SMF (which may also be referred to as a session management device) may be configured to be responsible for session management (including session establishment, modification, and release) of user equipment, selection and reselection of a user plane function network element, internet protocol (internet protocol, IP) address allocation of the user equipment, quality of service (quality of service, QoS) control, and the like. For example, in 5G, the session management network element may be a session management function (session management function, SMF) network element. In a future communication system, for example, in 6G, the session management network element may still be an SMF network element, or may have another name. This is not limited in this application. When the session management network element is an SMF network element, the SMF may provide an Nsmf service.

The UDM may also be referred to as a unified data management device, a unified data management network element, a data management device, or a unified data management entity. The UDM is configured for terminal device identifier handling, access authentication, registration, and mobility management. In a 5G communication system, the unified data management may be a UDM or a unified data management device. In a future communication system, for example, in 6G, the unified data management may still be a UDM network element, or may have another name. This is not limited in embodiments of this application. The unified data management device may be a core network device. The unified data management device may be a control plane device.

The UDR may also be referred to as a user data repository device, a user data repository entity, or a user data repository network element. The UDR may be understood as a name of a unified data repository network element in a 5G architecture. The user data repository mainly includes the following functions: storage and retrieval functions of subscription data, policy data, application data, and other types of data.

The service requester (or referred to as an operation requester or a third party) may be understood as a device that sends a service request or an operation instruction. For example, the service requester may be a server (server), a passive internet of things application function (passive internet of things application function, P-IoT AF), an ambient internet of things application function (ambient Internet of things application function, A-IoT AF), an AF, or another device that sends a service request or an operation instruction. For example, the application function may be a server. The service requester may correspond to a specific type of user. The specific type of user may include an enterprise, a tenant, a third party, or a company. This is not limited. That the service requester corresponds to the specific type of user may be understood as that the service requester belongs to the specific type of user and is managed by the specific type of user. The service requester may send an inventory instruction to the reader through the core network, so that the reader triggers the internet of things device to report identification information, and the reader sends the identification information of the internet of things device to the service requester through the core network, to implement an inventory service.

In a possible implementation, the internet of things device is a tag, and the service requester is a server or an application function. The reader may send, to the tag, an instruction from the server or the application function; or the reader may send, to the server or the application function, a message from the tag. In another possible implementation, the reader may obtain, according to an instruction delivered by the server, information stored in a specified tag. For example, if the instruction instructs to perform a stocktaking operation (or may be referred to as an inventory operation), the reader obtains identification information of the tag. The identification information may be a unique identifier of the tag or may be a temporary identifier of the tag. For example, if the instruction instructs to perform a read operation, the reader reads data in a storage area of the tag. Optionally, in some scenarios in which information stored in the tag needs to be rewritten, the reader may further have a write function. For example, if the instruction instructs to perform a write operation, the reader writes data to the storage area of the tag. In addition, the reader may further perform a disable operation on the tag. After the disable operation is performed, the tag is disabled, and an operation like tag information obtaining, a stocktaking operation, a read operation, a message exchange operation with the tag, or a write operation cannot be performed on the tag. In a possible implementation, that the tag is disabled and the tag information obtaining cannot be performed on the tag may be understood as that the reader cannot obtain tag information of the disabled tag after the tag is disabled. In another possible implementation, that the tag is disabled and the message exchange operation with the tag cannot be performed on the tag may be understood as that the reader cannot perform message exchange with the disabled tag after the tag is disabled.

The following describes related concepts in embodiments of this application.
1. Ambient internet of things and internet of things device in the ambient internet of things.

The ambient internet of things is a cellular internet of things communication technology that harvests energy from environments without being equipped with or relying on batteries, to support data sensing, transmission, and distributed computing. The ambient internet of things may also be referred to as an ambient energy harvesting internet of things (Ambient IoT, A-IoT), or may be referred to as a passive internet of things (passive internet of things, passive IoT). A name of the ambient internet of things is not limited in embodiments of this application.

An internet of things device/internet of things terminal in the ambient internet of things may be passive (passive), semi-passive (semi-passive), semi-active (semi-active), or active (active). Passive and semi-passive terminals may communicate on a reflected carrier, that is, the passive and semi-passive terminals need to rely on an external carrier source for communication. The semi-passive terminal may have a power amplifier, so that a communication distance is longer than that of the passive terminal. An active terminal may actively generate a carrier (or may be understood as having a carrier recovery capability), and may perform communication without relying on an external carrier source. Therefore, the active terminal may have an active communication capability. However, the active terminal may also be backward compatible with a communication mechanism of the passive terminal or the semi-passive terminal. For example, the active terminal may trigger, through external excitation, the active terminal to initiate a random access procedure and send identification information.

In addition, the passive terminal may have or may not have an energy storage capacitor. If the passive terminal has an energy storage capacitor, the passive terminal needs to rely on an external environment to harvest energy, for example, radio frequency energy, for communication. The semi-passive terminal usually has an energy storage capacitor, and energy such as solar energy and radio energy in an environment may be stored in the capacitor. The active terminal may also have an energy storage capacitor, and may harvest energy from solar energy, radio frequency energy, wind energy, water energy, tidal energy, or the like. An energy harvesting manner is not limited.

The ambient internet of things technology is widely applied to various industries. The following lists two application scenarios:
Warehouse/transportation/material management scenario: Goods are embedded in or attached with passive or semi-passive internet of things tags. Goods are stored in warehouses, shopping malls, and the like. During logistics processes, information about the goods is automatically collected by readers. In this way, management personnel can quickly query goods information in a system, to reduce a risk of goods being lost. This can improve a goods handover speed, improve accuracy, prevent unauthorized sales, and achieve anti-counterfeiting.

Fixed asset management scenario: For places with huge assets or valuable items, such as a library, an art museum, and a museum, complete management procedures or strict protection measures are required. When storage information of books or valuables changes abnormally, the system notifies an administrator in time to handle the relevant situation.

The ambient internet of things may be used in an inventory service. An ambient internet of things service is described below by using an example in which an internet of things device is a tag (tag), a reader is a base station, and a service requester is a server.

In an implementation, when the server performs an operation on the tag, the server may send an operation instruction to a core network, where the operation instruction may include but is not limited to obtaining tag information, performing a stocktaking operation (also referred to as an inventory operation), performing a read operation, performing a write operation, performing a disable operation, or performing an information exchange operation with the tag. The operation instruction may further include area location information, identification information of the tag, and the like. The base station sends an access instruction to the tag. After random access of the tag succeeds, the base station sends the operation instruction to the tag (the base station may forward, to the tag, the operation instruction sent by the core network). The tag obtains or sends corresponding information according to the operation instruction. For example, when the operation instruction is a stocktaking instruction or instructs to perform a stocktaking operation, the tag sends the identification information of the tag. When the operation instruction is a read instruction or instructs to perform a read operation, the tag sends data information stored in a storage area of the tag. When the operation instruction is a write instruction or instructs to perform a write operation, the tag stores, in the storage area of the tag, data information that is included in the operation instruction and that is to be written to the tag. The base station sends (or forwards), to the core network, the information sent by the tag. The core network sends the information to the server.

FIG. 2 and FIG. 3 each are a diagram of a passive internet of things service. In FIG. 2 and FIG. 3, a core network device performs a procedure related to an ambient internet of things service, for example, functions such as access management, security authentication, instruction transmission, and tag management of an internet of things device. In FIG. 2, an access management device (for example, an AMF) is enhanced to have an internet of things management function (or referred to as a passive internet of things management function or an ambient energy harvesting internet of things function), for example, to perform internet of things device management, data transmission, data routing, and information opening to a third party. In FIG. 3, an internet of things management function (for example, a TMF) is added to perform tag management, and the function may be connected to an access network device, which is equivalent to that the access network device has an interface to the function, or may be connected to the access network device through an AMF. A network topology location of the function is similar to a function such as an SMF or a PCF. In terms of deployment, the TMF may be co-deployed with the AMF.

A server may send an instruction (for example, send an operation instruction) through a control plane channel. As shown in FIG. 2 or FIG. 3, the server sends the instruction to an AMF (or another core network device that manages an internet of things device, executes a tag instruction, or supports a passive internet of things, for example, a TMF) through an NEF or an NSSAAF. In this case, the server may be an authentication, authorization, and accounting server (authentication, authorization, and accounting server, AAA server), an ambient internet of things application (A-IoT AF) function, a passive internet of things application function (P-IoT AF), an application server (application server, AS), or the like. In the foregoing architecture, after obtaining the instruction, the AMF or the TMF parses the instruction from the server, and the AMF or the TMF triggers the access network device (for example, a base station) to perform a random access process of an internet of things device (for example, a tag), in other words, the base station sends an instruction to the tag, to complete an operation on the tag. After receiving the instruction, the tag performs random access to the base station, performs registration after the random access succeeds, and sends tag information to the base station, where the tag information includes an identifier of the tag. The base station sends the tag information to the AMF, and the AMF sends the tag information to the AAA server or the P-IoT AF through the NEF or NSSAAF. In addition, the AMF may further perform access management on the tag based on a feedback from the AF, for example, determine whether access of the tag succeeds.

In an implementation, the service requester does not actively trigger service inventory, but enables, in a pre-configuration manner, a network to periodically report an internet of things device that exists in a campus. Alternatively, tags are attached to goods, and the tags are periodically inventoried through a network, so that statuses of the goods in an enterprise campus or a factory can be learned of, to implement an automatic warehousing management function.

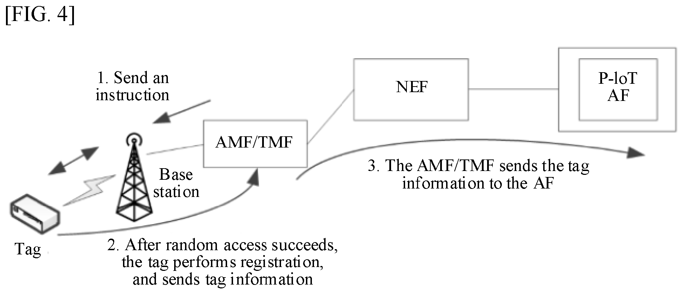

For example, FIG. 4 is a diagram of still another passive internet of things service. As shown in FIG. 4, an AMF or a TMF sends an instruction to a base station. Therefore, the base station sends an instruction (for example, an inventory instruction) to a tag, to trigger random access of the tag. After the random access of the tag succeeds, the tag performs registration, and sends tag information to the base station, where the tag information includes an identifier of the tag. The base station sends the tag information to the AMF or the TMF, and the AMF or the TMF sends the tag information to a server, to implement inventory for the tag.

It can be learned that, compared with the passive internet of things service in FIG. 2 and FIG. 3, in FIG. 4, a trigger of the inventory service is not a service requester, but the AMF or the TMF. However, for the tag, the base station triggers the inventory service, in other words, the base station triggers the random access of the tag, and reports the tag information after the random access succeeds.

2. Non-public network (non-public network, NPN) and closed access group identifier (closed access group identifier, CAG ID).

The non-public network NPN is a network that is different from a public network and that serves a specific user. Depending on whether a core network (core network, CN) is independent, the non-public network includes a standalone NPN (standalone NPN, SNPN) network and a public network integrated NPN (public network integrated NPN, PNI-NPN).

The SNPN does not depend on a public land mobile network (public land mobile network, PLMN) and is operated by an operator of the standalone non-public network SNPN. It may be understood that, the core network of the SNPN is independent of the PLMN, in other words, the core network of the SNPN is independently operated by the SNPN.

The PNI-NPN depends on a PLMN and is operated by a traditional operator. It may be understood that the PNI-NPN is actually a PLMN, but the PLMN provides a special slice and/or a data network to provide an NPN service. It may also be understood that not all terminal devices can obtain the NPN service, and the terminal device can obtain the NPN service only after slice authentication and/or secondary authentication succeed/succeeds. It may also be understood that the PNI-NPN isolates a public network service from a private network service through slicing, to provide the private network service for a private network user.

A slice is configured at a granularity of a tracking area (tracking area, TA). To be specific, base stations (or cells) belonging to a same TA support a same slice. Because the PNI-NPN is isolated by using a specific slice, a geographical location range in which the terminal device can obtain a PNI-NPN service is large. To further limit a range of obtaining the PNI-NPN service, the concept of closed access group identifier CAG ID is proposed. Specifically, a base station (or a cell) belonging to the PNI-NPN may broadcast a CAG ID list. An allowed CAG list (allowed CAG list) of the terminal device is also stored in subscription data of the terminal device. When the terminal device performs a registration procedure, the base station includes, in an N2 message sent to an AMF, a CAG list supported by the cell. The AMF determines, based on the CAG list supported by the cell and the allowed CAG list of the terminal device, whether to allow the terminal device to access the cell. In this manner, the terminal device may be restricted from obtaining the service by accessing the PNI-NPN network through a specific cell, to narrow an access range. For example, if a CAG list supported by a cell includes a CAG 1 and a CAG 2, and an allowed CAG list in subscription data of UE includes the CAG 2 and a CAG 3, the cell supports the CAG 2, and the subscription data of the terminal device also includes the CAG 2, so that the terminal device is allowed to access the cell.

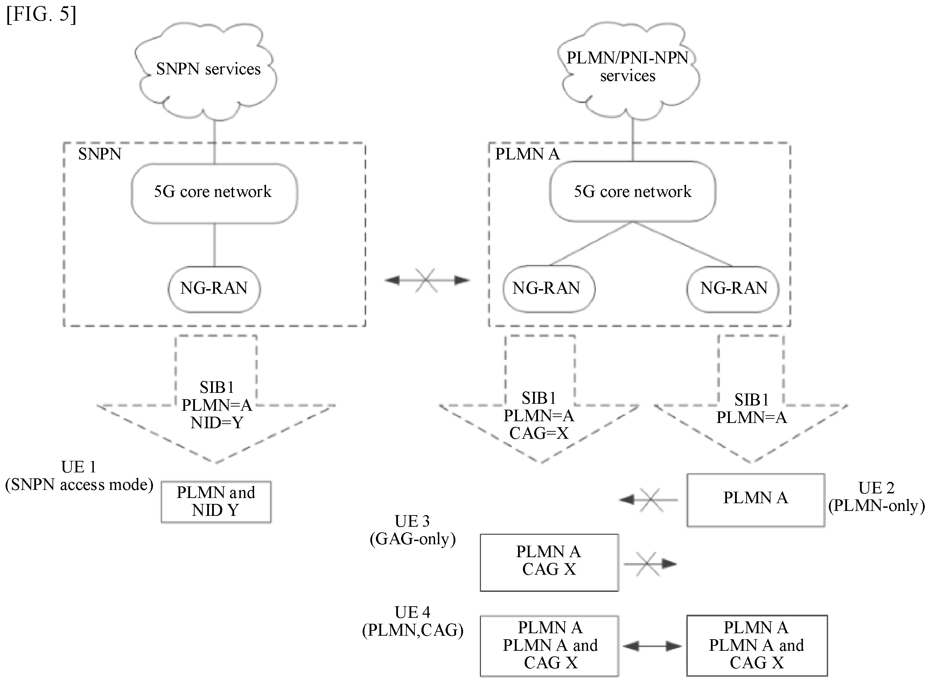

For example, FIG. 5 is a diagram of SNPN services (SNPN services) and PLMN/PNI-NPN services (PLMN/SNPN services). As shown in FIG. 5, in the SNPN services, an SNPN includes a 5G core network (5G core network) and a next generation radio access network (next generation radio access network, NG-RAN), where a system information block (system information block, SIB)1 includes a PLMN identifier A identifying a PLMN, and a network identifier (network identifier, NID) Y. If UE 1 supports access to the SNPN network with an SNPN identifier A+Y (that is, the identifier of the SNPN network is PLMN=A+NID=Y), the UE 1 may access the SNPN shown in FIG. 5, in other words, when an access mode of the UE 1 is an SNPN access mode (SNPN access mode), the UE 1 may access the SNPN. As shown in FIG. 5, when an NPN is a PNI-NPN, a PLMN (for example, a PLMN A) may include PLMN/PNI-NPN services, and the PLMN A includes a 5G core network and two NG-RANs. A SIB1 of one NG-RAN includes a PLMN identifier (the PLMN identifier is A) and a CAG ID X. In another NG-RAN, a SIB1 includes a PLMN identifier (the PLMN identifier is A), and does not support broadcasting of a CAG ID. If UE 2 supports access to the PLMN with the PLMN identifier A but does not support access to a CAG cell, the UE 2 can access only the PLMN but cannot access the PNI-NPN. If UE 3 supports access to a CAG cell. For example, if the UE 3 supports access to a PNI-NPN with the PLMN identifier A and a CAG ID X, the UE 3 can access a cell of the PNI-NPN cell but cannot access a cell of the PLMN. If UE 4 supports access to the PLMN with the PLMN identifier A and supports access to the PNI-NPN with the PLMN identifier A and the CAG ID X, the UE 4 can access both the PNI-NPN and the PLMN. In addition, when accessing the SNPN, the terminal device cannot be directly switched from the SNPN to the PNI-NPN. Similarly, when the terminal device accesses the PNI-NPN, the terminal device cannot be directly switched from the PNI-NPN to the SNPN.

### 3. Registration procedure of a terminal device

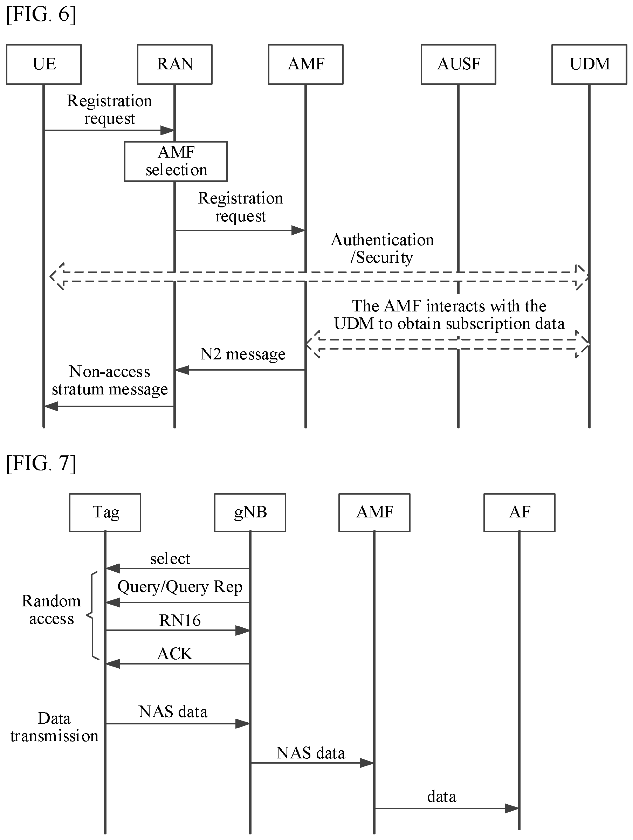

For example, FIG. 6 is a diagram of a registration procedure of a terminal device. As shown in FIG. 6, the terminal device UE sends registration request information to a radio access network RAN. Correspondingly, the RAN receives the registration request information from the terminal device. The registration request information carries a registration type (registration type) and identification information of the terminal device. The registration type of the terminal device includes initial registration (initial registration), mobility registration update (mobility registration update), periodic registration update (periodic registration update), and emergency registration (emergency registration). The identification information of the terminal device may be a subscription concealed identifier (subscription concealed identifier, SUCI), a 5th generation communication system globally unique temporary identifier (5G globally unique temporary identifier, 5G-GUTI), or a permanent equipment identifier (permanent equipment identifier, PEI).

The RAN selects an AMF for the terminal device. The RAN sends a registration request to the selected AMF. Optionally, the RAN sends, to the AMF by using an N2 message, a non-access stratum (non access stratum, NAS) message from the terminal device, in other words, the N2 message includes the NAS message, that is, the N2 message includes the registration request. In a PNI-NPN scenario, the N2 message further includes a CAG list supported by the RAN.

The AMF determines an authentication server function AUSF, and performs a security procedure such as authentication. It may be understood that the terminal device, the AMF, the AUSF, and a UDM interact with each other to complete the security procedure such as authentication.

The AMF determines whether to allow access of the terminal device. Specifically, after authentication between the terminal device and a network side succeeds, the AMF interacts with the UDM to obtain subscription data of the terminal device. In the PNI-NPN scenario, the AMF compares an allowed CAG list of the terminal device stored in the unified data management UDM function with a supported closed access group identifier CAG list reported by an access network device by using the N2 message. When at least one CAG in the CAG list supported by the RAN is a CAG in the allowed CAG list of the UE, the AMF allows access of the terminal device.

The AMF sends the N2 message to the RAN. The N2 message includes a NAS message that needs to be forwarded by the RAN to the terminal device, the NAS message includes a registration accept message sent by the AMF to the terminal device, the registration accept message includes a registration area (registration area), and the registration area is a tracking area identity (tracking area identity, TAI) list. The RAN forwards, to the terminal device, the registration accept message (the NAS message) sent by the AMF.

### 4. Diagram of an inventory procedure of an internet of things terminal

For example, FIG. 7 is a diagram of a service inventory procedure of a tag. As shown in FIG. 7, a base station (gNB) sends a select command, where the select command carries mask information (for example, a range identified by the tag) and storage area information matching the mask information. After receiving the select command, the tag determines whether the tag belongs to the tag range that needs to be determined in the select command. For example, the tag uses a storage area indicated by the storage area information to match the mask information, and determines whether the tag belongs to a tag selected according to the select command. If yes, a random number is generated, and information is fed back after a query Query command is subsequently heard; or if not, no processing is performed subsequently.

The gNB continues to send the Query command or a query repetition Query Rep command. Each time the tag receives a Query command or a Query Rep command, the tag decreases a value of the generated random number by one; and when the value of the generated random number is decreased to 0, the tag triggers to initiate random access. Specifically, the tag sends a random number RN16 to the gNB, that is, sends a 16-bit random number. When receiving the random number RN16 from the tag, the gNB sends an acknowledgment (acknowledge, ACK) to the tag, where the ACK includes the received random number RN16. When receiving the ACK from the gNB, the tag verifies the random number RN16 carried in the ACK.

If the random number RN16 carried in the ACK is the same as the random number RN16 generated by the tag, the tag sends non-access stratum data (NAS data) to the gNB, where the NAS data includes identification information of the tag. Therefore, the gNB sends the NAS data of the tag to an AMF. Then, the AMF sends data (data) to an AF, where the data includes the identification information of the tag, to complete a stocktaking procedure.

However, internet of things devices corresponding to different service requesters may exist in a same campus, and the different service requesters have different inventory service requirements. For example, some service requesters request to perform an inventory service at an interval of one hour from 8:00 to 18:00, to obtain identifiers and/or location information of internet of things devices managed by the service requesters. However, another service requester may want to perform service inventory in a time period at night.

Therefore, for requirements of different service requesters, if the base station triggers an inventory service, all internet of things devices corresponding to a plurality of service requesters in the campus may perform random access and report identification information. Consequently, a large amount of signaling is wasted. In addition, if a correspondence between the internet of things devices and the service requesters is not stored in a core network, after receiving a registration request of an internet of things terminal, the core network performs only a security authentication procedure, and does not feed back identification information to a corresponding service requester. As a result, an inventory service cannot be implemented. In other words, even if the core network learns that the identification information needs to be fed back to the service requester, because there is no correspondence between the internet of things device and the service requester, the core network cannot feed back obtained data to the corresponding service requester.

For ease of understanding embodiments disclosed in this application, the following two points are described.
(1) In embodiments disclosed in this application, a scenario of a new radio (new radio, NR) network is used as an example for description. It should be noted that the solutions in embodiments disclosed in this application may be further applied to another wireless communication network, and a corresponding name may be replaced with a name of a corresponding function in the another wireless communication network.
(2) Aspects, embodiments, or features of this application are presented in embodiments disclosed in this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Embodiments of this application provide a communication method 100. In the communication method 100, a reader obtains one or more first identifiers and time information corresponding to each of the one or more first identifiers, where the one or more first identifiers correspond to a first service requester. The reader broadcasts the one or more first identifiers based on the time information corresponding to each of the one or more first identifiers, to trigger service inventory of the first service requester or trigger an access procedure of an internet of things terminal corresponding to the first service requester. Compared with that the reader simultaneously broadcasts all identifiers supported by the reader, this manner helps the reader trigger the service inventory of the first service requester in a specific time period, instead of triggering service inventory of all service requesters within a coverage area of the reader, so that signaling overheads can be reduced, and internet of things devices associated with different service requesters can also be distinguished. In addition, when the plurality of first identifiers correspond to different services of the first service requester (for example, when different first identifiers correspond to different services of the first service requester), the method further helps trigger service inventory for a specific service of the first service requester (or helps trigger inventory for a terminal corresponding to the specific service of the first service requester), to perform access procedures of internet of things devices corresponding to the different services (or distinguish between the internet of things devices corresponding to the different services).

Embodiments of this application further provide a communication method 200 for broadcasting a third identifier by a reader, where the third identifier is any one of one or more first identifiers corresponding to a first service requester. In the communication method 200, the reader broadcasts the third identifier based on time information corresponding to the third identifier, where the third identifier corresponds to the first service requester. A first internet of things device sends identification information to the reader, where the identification information identifies the first internet of things device, and the first internet of things device is an internet of things device managed by or corresponding to the first service requester. The reader sends first information to a core network device, where the first information includes the identification information. The core network device determines the first service requester that manages the first internet of things device. The core network device sends the identification information to the first service requester. It can be learned that the reader implements service inventory of the first service requester by broadcasting, in a specific time period, the third identifier corresponding to the first service requester. Compared with that the reader simultaneously broadcasts all identifiers supported by the reader to trigger service inventory of all service requesters within a coverage area of the reader, this manner can reduce signaling overheads.

In embodiments of this application, the time information corresponding to each of the one or more first identifiers may be understood as time information corresponding to a part or all of the one or more first identifiers. Therefore, that the reader broadcasts the one or more first identifiers based on the time information corresponding to each of the one or more first identifiers may be understood as that the reader broadcasts the part or all of the first identifiers based on the time information corresponding to the part or all of the one or more first identifiers.

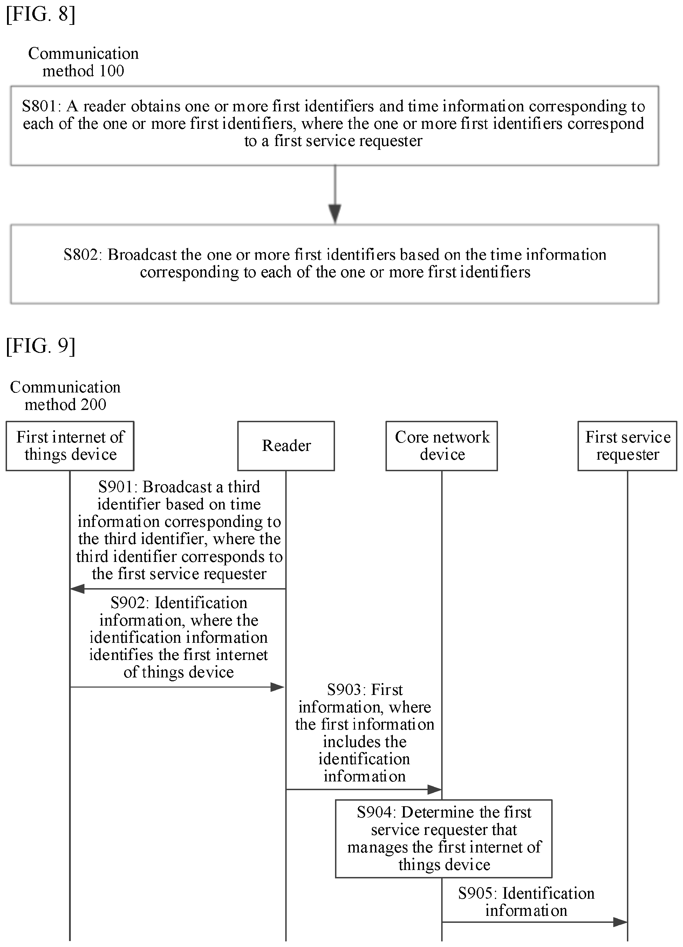

Embodiments of this application provide the communication method 100. FIG. 8 is a schematic flowchart of the communication method 100. The communication method 100 is described from a perspective of a reader. The communication method 100 includes but is not limited to the following steps.

S801: The reader obtains one or more first identifiers and time information corresponding to each of the one or more first identifiers, where the one or more first identifiers correspond to a first service requester.

That the one or more first identifiers correspond to the first service requester may be understood as that the one or more first identifiers are associated with a service of the first service requester; in addition, one first identifier is associated with one service of the first service requester, and different first identifiers may be associated with different services of the first service requester or a same service of the first service requester. In a possible implementation, the service of the first service requester may be an ambient internet of things service, in other words, the one or more first identifiers may correspond to the ambient internet of things service of the first service requester, so that the first identifier may be a dedicated identifier of the ambient internet of things service, where the ambient internet of things service may also be referred to as an ambient energy harvesting internet of things service, or may also be referred to as a passive internet of things service. For example, the service of the first service requester may include a service 1 (for example, warehouse management) and a service 2 (for example, asset stocktaking). Each service corresponds to a different internet of things terminal. For example, an internet of things terminal corresponding to the warehouse management may be associated with goods (for example, the internet of things terminal is attached to the goods), and an internet of things terminal for the asset stocktaking may be associated with an asset item (for example, the internet of things terminal is attached to the asset item). For example, the ambient internet of things service of the first service requester includes a service 1 and a service 2, the service 1 is associated with a first identifier a, and the service 2 is associated with a first identifier b. Therefore, the first identifier a and the first identifier b correspond to the first service requester.

In an optional implementation, the one or more first identifiers may be access identifiers used when an internet of things device accesses a cell, for example, may be closed access group identifiers CAG IDs. The CAG ID is an identifier used by the internet of things device to connect to a network (for example, a public network or a non-public network) through a specific area. For details, refer to the foregoing descriptions. Details are not described again. It can be learned that the one or more first identifiers may reuse an existing CAG ID in a protocol, so that modifications to the protocol can be reduced, or it may be understood that the existing CAG ID can be extended to the ambient internet of things service.

In another optional implementation, when there is one first identifier, the first identifier may be an identifier of the first service requester. The identifier of the first service requester may be globally unique identifier information, globally unique identifier information of an operator, or the like. Alternatively, the identifier of the first service requester may be an application function identifier corresponding to the first service requester, for example, an AF ID, an AF identifier, or an AF identity. When there are a plurality of first identifiers, the first identifiers may be service identifiers corresponding to different services of the first service requester, for example, a service identifier, a service ID, a service identity, an application (application, APP) ID, an APP identifier, or an APP identity.

In still another optional implementation, the first identifier may be a group identifier, for example, a group ID, an external group identifier (external group ID), or an internal group identifier (internal group ID). The group identifier may be understood as an identifier of a group to which the internet of things device belongs.

In an optional implementation, the time information corresponding to the first identifier may be a broadcast time requirement, namely, a time requirement for broadcasting the first identifier. Specifically, the time information corresponding to the first identifier includes one or more of the following: sending time, a sending periodicity, valid time, a sending frequency, and a sending interval. For example, the time information corresponding to the first identifier is sending time of the first identifier. For another example, the time information corresponding to the first identifier is sending time and a sending periodicity of the first identifier. For another example, the time information corresponding to the first identifier is sending time, a sending periodicity, a sending interval, and valid time of the first identifier.

It may be understood that specific forms of the time information corresponding to all of the one or more first identifiers may be the same, or may be different. This is not limited in embodiments of this application. For example, the plurality of first identifiers include a first identifier a and a first identifier b, time information corresponding to the first identifier a is sending time and a sending periodicity of the first identifier a, and time information corresponding to the first identifier b is sending time and a sending periodicity of the first identifier b. For another example, the plurality of first identifiers include a first identifier a and a first identifier b, time information corresponding to the first identifier a is sending time and a sending periodicity of the first identifier a, and time information corresponding to the first identifier b is sending time and valid time of the first identifier b.

In addition, the sending time of the first identifier may be one or more of a start time point, a time interval, an end time point, and sending duration of the first identifier. A specific manner of the sending time is not limited in embodiments of this application.

In an optional implementation, different first identifiers in the one or more first identifiers correspond to different time information, so that broadcast time of the different first identifiers in the one or more first identifiers varies. This manner helps the reader broadcast the different first identifiers in one or more first identifiers in different time periods.

In an optional implementation, that the reader obtains the one or more first identifiers and the time information corresponding to each of the one or more first identifiers includes: receiving, from a core network device, the one or more first identifiers and the time information corresponding to each of the one or more first identifiers. In a possible implementation, the first service requester sends, to the core network device, the one or more first identifiers corresponding to the first service requester and the time information corresponding to each of the one or more first identifiers. In another possible implementation, the core network device obtains, by using subscription data or configuration information, the one or more first identifiers corresponding to the first service requester, and the time information corresponding to each of the one or more first identifiers. Therefore, the core network device sends, to the reader, the one or more first identifiers corresponding to the first service requester and the time information corresponding to each of the one or more first identifiers. Correspondingly, the reader receives, from the core network device, the one or more first identifiers and the time information corresponding to each of the one or more first identifiers.

Optionally, that the reader obtains the one or more first identifiers and the time information corresponding to each of the one or more first identifiers includes: The reader obtains, from an operation, administration, and maintenance (operation, administration, and maintenance, OAM) system (which may be briefly referred to as a network management system), the one or more first identifiers corresponding to the first service requester and the time information corresponding to each of the one or more first identifiers.

Optionally, the reader is configured with the one or more first identifiers corresponding to the first service requester, and the time information corresponding to each of the one or more first identifiers. Therefore, that the reader obtains the one or more first identifiers and the time information corresponding to each of the one or more first identifiers may be understood as that the reader obtains, from configuration information, the one or more first identifiers and the time information corresponding to each of the one or more first identifiers. For example, the one or more first identifiers corresponding to the first service requester and the time information corresponding to each of the one or more first identifiers that are configured in the reader are configured by the core network device or the network management system for the reader.

It can be learned that the reader can flexibly obtain, in a plurality of manners, the one or more first identifiers and the time information corresponding to each of the one or more first identifiers. A specific implementation in which the reader obtains the one or more first identifiers and the time information corresponding to each of the one or more first identifiers is not limited in embodiments of this application.

In a possible implementation, a manner in which the reader obtains the one or more first identifiers may be different from a manner in which the reader obtains the time information corresponding to the one or more first identifiers. For example, the reader may obtain the one or more first identifiers from the core network device, and obtain, from the network management system or configuration information, the time information corresponding to the one or more first identifiers. Both the manner in which the reader obtains the one or more first identifiers and the manner in which the reader obtains the time information corresponding to the one or more first identifiers may be the foregoing manner (for example, obtained from the core network device, obtained from the network management system, or obtained from the configuration information).

In an optional implementation, the time information corresponding to each of the one or more first identifiers corresponding to the first service requester is determined by the first service requester, the core network device, or the network management system based on a service requirement (for example, an inventory service requirement) corresponding to the first identifier. Therefore, for first identifiers corresponding to different services of the first service requester, different first identifiers correspond to different time information. This helps the reader trigger service inventory for different services of the first service requester at different time or in different time periods. In a possible implementation, the service requirement may be determined after an enterprise corresponding to the service requester negotiates with an operator.

For example, the service of the first service requester includes a service 1, a service 2, and a service 3, where the service 1, the service 2, and the service 3 respectively correspond to a first identifier 1, a first identifier 2, and a first identifier 3, a service inventory requirement of the first service requester on the service 1 is 10:00 to 12:00 every day, a service inventory requirement on the service 2 is 14:00 to 16:00 every day, and a service inventory requirement on the service 3 is 19:00 to 20:00 every day. In this case, the first service requester determines that time information corresponding to the first identifier 1 includes a start time point 10:00, an end time point 12:00, a sending periodicity 24 hours, and a sending interval per minute of the first identifier 1; time information corresponding to the first identifier 2 includes a start time point 14:00, an end time point 16:00, a sending periodicity 24 hours, and a sending interval every 2 minutes of the first identifier 1; and time information corresponding to the first identifier 3 includes a start time point 19:00, an end time point 20:00, a sending periodicity 24 hours, and a sending interval every 5 minutes of the first identifier 1.

S802: The reader broadcasts the one or more first identifiers based on the time information corresponding to each of the one or more first identifiers.

It may be understood that the reader broadcasts the first identifier based on the time information corresponding to each of the one or more first identifiers. Alternatively, it may be understood that for any one of the one or more first identifiers, the reader broadcasts the first identifier based on time information corresponding to the first identifier. For example, the plurality of first identifiers include a first identifier a and a first identifier b, the reader broadcasts the first identifier a based on time information 1 corresponding to the first identifier a, and the reader broadcasts the first identifier b based on time information 2 corresponding to the first identifier b.

It can be learned that the reader broadcasts one of the one or more first identifiers at the same time or in a same time period, instead of broadcasting an identifier list supported by the reader, that is, instead of broadcasting all identifiers supported by the reader. In this way, the reader can trigger service inventory of the first service requester corresponding to one first identifier (or trigger random access of an internet of things terminal of the first service requester corresponding to the first identifier), instead of triggering service inventory of all service requesters within a coverage area of the reader (or random access of internet of things terminals corresponding to all the service requesters), so that signaling overheads can be reduced, the service requester corresponding to the internet of things terminal that accesses a network can be effectively identified, and same data routing can be performed.

In addition, when the plurality of first identifiers correspond to different services of the first service requester (for example, when different first identifiers correspond to different services of the first service requester), the reader broadcasts one of the plurality of first identifiers at the same time or in a same time period. This helps trigger service inventory for a specific service of the first service requester (or helps trigger inventory for a terminal corresponding to the specific service of the first service requester), to perform access procedures of internet of things devices corresponding to the different services (or distinguish between the internet of things devices corresponding to the different services).

Optionally, a first identifier in the plurality of first identifiers may correspond to a plurality of service requesters. When a first identifier in the plurality of first identifiers corresponds to a plurality of service requesters, the reader broadcasts the first identifier based on the time information corresponding to the first identifier. If the reader receives identification information that is reported by a plurality of internet of things devices in response to the first identifier and that identifies the plurality of internet of things devices, the reader determines, based on subscription information of each internet of things device, a service requester that manages each internet of things device, and sends, to the service requester that manages each internet of things device, the identification information that identifies the internet of things device. In this manner, the reader may trigger, by broadcasting the first identifier, service inventory of the plurality of service requesters corresponding to the identifier, to reduce signaling overheads and improve service inventory efficiency.

For example, the plurality of first identifiers include an identifier #1, where the identifier 1 identifies a service 1, and both a service requester 1 and a service requester 2 have service inventory for the service 1. The reader broadcasts the identifier #1 based on time information of the identifier #1. If the identifier 1 is configured for both an internet of things device 1 and an internet of things device 2, both the internet of things device 1 and the internet of things device 2 respond to the identifier #1 broadcast by the reader. The internet of things device 1 and the internet of things device 2 separately send, to the reader, identification information #1 that identifies the internet of things device 1 and identification information 2 that identifies the internet of things device 2. The reader separately determines, based on subscription information of the internet of things device 1 and the internet of things device 2, that a service requester managing the internet of things device 1 is the service requester 1, and that a service requester managing the internet of things device 2 is the service requester 2. Therefore, the reader sends, to the service requester 1, the identification information that identifies the internet of things device 1, and sends, to the service requester 2, the identification information that identifies the internet of things device 2. It can be learned that the reader broadcasts the identifier #1, so that the service requester 1 and the service requester 2 implement service inventory for the service 1.

In an optional implementation, for any one of the one or more first identifiers, when time information corresponding to the first identifier is sending time of the first identifier, the reader broadcasts the first identifier based on the sending time of the first identifier. For example, if the sending time of the first identifier is a start time point and an end time point (or referred to as a deadline time point) of the first identifier, the reader broadcasts the first identifier in a time period starting from the start time point and ending at the end time point. For another example, if the sending time of the first identifier is a start time point and sending duration of the first identifier, the reader broadcasts the first identifier in the sending duration starting from the start time point. For another example, if the sending time of the first identifier is a start time point and a time interval, the reader broadcasts, starting from the start time point, the first identifier at an interval of the time interval.

In another optional implementation, for any one of the one or more first identifiers, when time information corresponding to the first identifier is sending time and a sending periodicity of the first identifier, the reader broadcasts the first identifier based on the sending time and the sending periodicity of the first identifier. For example, if the time information corresponding to the first identifier is sending time and a sending periodicity of the first identifier, the sending time of the first identifier is a start time point and an end time point, and the sending periodicity is T1, the reader broadcasts the first identifier in a time period starting from the start time point and ending at the end time point, and periodically broadcasts the first identifier at an interval of T1 after broadcasting the first identifier in the time period starting from the start time point and ending at the end time point.

In still another optional implementation, for any one of the one or more first identifiers, when the time information corresponding to the first identifier is valid time of the first identifier, the reader broadcasts the first identifier within the valid time of the first identifier. Optionally, for any one of the one or more first identifiers, when the time information corresponding to the first identifier is a sending periodicity and valid time of the first identifier, the reader periodically broadcasts the first identifier within the valid time of the first identifier based on the sending periodicity. It can be learned that when forms of the time information corresponding to the first identifier are different, the reader may flexibly broadcast the first identifier in a plurality of manners.

In an optional implementation, the reader may further broadcast storage area information, where the storage area information represents a storage area that stores the one or more first identifiers. This manner helps the internet of things device determine, based on the storage area that stores the one or more first identifiers, whether to match or respond to a broadcast message including the one or more first identifiers.

In an optional implementation, the reader may further perform the following steps: obtaining second information, where the second information indicates to update the first identifier corresponding to the first service requester; and updating, based on the second information, the first identifier corresponding to the first service requester. For an implementation in which the reader obtains the second information, refer to the implementation in which the reader obtains the one or more first identifiers and the time information corresponding to each of the one or more first identifiers. Details are not described again.

Optionally, the second information specifically indicates to delete at least one of the one or more first identifiers. For example, the second information specifically indicates to delete at least one of the one or more first identifiers corresponding to the first service requester, for example, delete an identifier 1 from the one or more first identifiers. In a possible implementation, the reader deletes, based on the second information, the identifier 1 from the one or more first identifiers corresponding to the first service requester, for example, unbinds a correspondence between the identifier 1 and the first service requester, and does not broadcast the identifier 1 when broadcasting the first identifier corresponding to the first service requester again. In another possible implementation, the reader does not broadcast the identifier 1 based on the second information. In this manner, the second information may be deletion configuration information, where the deletion configuration information is used to delete at least one of the one or more first identifiers corresponding to the first service requester.

For example, if the one or more first identifiers corresponding to the first service requester include an identifier a, an identifier b, and an identifier c, and the second information indicates to delete the identifier b corresponding to the first service requester, the reader unbinds a correspondence between the identifier b and the first service requester, and when broadcasting the identifier corresponding to the first service requester again, the reader broadcasts the identifier a based on time information corresponding to the identifier a and broadcasts the identifier c based on time information corresponding to identifier c, without broadcasting the identifier b. For another example, if the one or more first identifiers corresponding to the first service requester include an identifier a, an identifier b, and an identifier c, and the second information indicates to delete the identifier b corresponding to the first service requester, when broadcasting the identifier corresponding to the first service requester again, the reader broadcasts the identifier a based on time information corresponding to the identifier a, and broadcasts the identifier c based on time information corresponding to the identifier c, without broadcasting the identifier b.

Optionally, the second information specifically indicates to add a first identifier and add time information corresponding to the first identifier. For example, the second information specifically indicates to add a first identifier and time information corresponding to the first identifier for the first service requester, for example, add an identifier 2 and add time information corresponding to the added identifier 2 for the first service requester. In a possible implementation, the reader associates the identifier 2 with the first service requester and adds the corresponding time information for the identifier 2 based on the second information. The reader broadcasts the identifier 2 based on the time information corresponding to the identifier 2. In another possible implementation, when broadcasting, based on the second information, the identifier corresponding to the first service requester, the reader further broadcasts the identifier 2 based on the time information corresponding to the identifier 2. For example, if the one or more first identifiers corresponding to the first service requester include an identifier a and an identifier b, and the second information indicates to add an identifier c corresponding to the first service requester, when broadcasting the identifier corresponding to the first service requester again, the reader broadcasts the identifier a based on time information corresponding to the identifier a, broadcasts the identifier b based on time corresponding to the identifier b, and broadcasts the identifier c based on time information corresponding to the identifier c. In this manner, the second information may be creation configuration information, where the creation configuration information is used to add an identifier corresponding to the first service requester.

Optionally, the second information specifically indicates to modify time information corresponding to at least one of the one or more first identifiers. For example, the second information specifically indicates to modify time information corresponding to at least one, for example, an identifier 3, of the one or more first identifiers corresponding to the first service requester. Therefore, the reader modifies, based on the second information, the time information corresponding to the identifier 3. Further, when broadcasting the one or more first identifiers corresponding to the first service requester again, the reader broadcasts the identifier 3 based on modified time information corresponding to the identifier 3. In this manner, the second information may be modification configuration information, where the configuration modification information is used to modify the time information corresponding to the at least one of the one or more first identifiers corresponding to the first service requester.

It can be learned that the reader may obtain the second information, and update, based on the second information, the first identifier and/or the time information that are/is broadcast. Further, when broadcasting the first identifier again, the reader broadcasts an updated identifier based on time information corresponding to the updated identifier.

In an optional implementation, the reader further obtains one or more second identifiers and time information corresponding to each of the one or more second identifiers, where the one or more second identifiers correspond to a second service requester. The reader broadcasts the one or more second identifiers based on the time information corresponding to each of the one or more second identifiers. The time information corresponding to the second identifier may be a broadcast time requirement, namely, a time requirement for broadcasting the second identifier. In addition, time that is determined by the reader based on the time information corresponding to the first identifier and that is for broadcasting the first identifier is different from time that is determined based on the time information corresponding to the second identifier and that is for broadcasting the second identifier.

Optionally, the one or more first identifiers are used to trigger service inventory of the first service requester (or used to trigger an internet of things device corresponding to the first service requester to initiate random access), and the one or more second identifiers are used to trigger service inventory of the second service requester (or used to trigger an internet of things device corresponding to the second service requester to initiate random access). In this application, that the internet of things device initiates random access may be understood as that the internet of things device performs a random access procedure, or that the internet of things device is triggered to initiate random access may be understood as that an access procedure or a random access procedure of the internet of things device is triggered.

For a parameter type included in the time information corresponding to the second identifier, refer to the parameter type included in the time information corresponding to the first identifier. Details are not described again. Each service of the second service requester is associated with one second identifier, so that each of one or more services of the second service requester is associated with one second identifier, and therefore, the second service requester corresponds to the one or more second identifiers.

The time that is determined by the reader based on the time information corresponding to the first identifier and that is for broadcasting the first identifier is different from the time that is determined based on the time information corresponding to the second identifier and that is for broadcasting the second identifier, so that the reader can trigger the service inventory of the first service requester and the service inventory of the second service requester at different times. It can be learned that, the reader can trigger service inventory of different service requesters at different times. This can reduce signaling overheads compared with that the reader triggers service inventory of all service requesters at the same time.

In embodiments of this application, the reader obtains the one or more first identifiers corresponding to the first service requester, and the time information corresponding to each of the one or more first identifiers. The reader broadcasts the one or more first identifiers based on the time information corresponding to each of the one or more first identifiers, to trigger the service inventory of the first service requester. Compared with broadcasting, by the reader, the identifier list supported by the reader, this manner helps the reader trigger the service inventory of the first service requester in a specific time period, instead of triggering the service inventory of all the service requesters within the coverage area of the reader, so that signaling overheads can be reduced, and internet of things devices corresponding to different service requesters can also be distinguished. In addition, when the one or more first identifiers correspond to different services, the method further helps trigger service inventory for a specific service of the first service requester, to distinguish between internet of things devices corresponding to the different services.

Embodiments of this application further provide the communication method 200 for broadcasting, by a reader, any one of one or more first identifiers corresponding to a first service requester. For ease of description, in the communication method 200, an example in which a third identifier is one of the one or more first identifiers corresponding to the first service requester is used for description. FIG. 9 is an interaction diagram of the communication method 200. The communication method 200 is described from a perspective of interaction between a reader, an internet of things device, a core network device, and a first service requester. The communication method 200 includes but is not limited to the following steps.

S901: The reader broadcasts the third identifier based on time information corresponding to the third identifier, where the third identifier corresponds to the first service requester.

It may be understood that, before broadcasting the third identifier, the reader obtains the one or more first identifiers corresponding to the first service requester, and time information corresponding to each of the one or more first identifiers. The one or more first identifiers include the third identifier. For example, the one or more first identifiers include an identifier #a, an identifier #b, and an identifier #c, and the third identifier is the identifier #b.

In addition, for an implementation of the third identifier, refer to the implementation of the first identifier in the communication method 100. Details are not described again. For a parameter type included in time information corresponding to the third identifier, also refer to the parameter type included in the time information corresponding to the first identifier in the communication method 100. Details are not described again.

The reader broadcasts the third identifier based on the time information corresponding to the third identifier, to trigger service inventory of the first service requester or trigger an internet of things device corresponding to the first service requester to initiate random access. For a specific implementation in which the reader broadcasts the third identifier based on the time information corresponding to the third identifier, refer to the descriptions in S802. Details are not described again.

In an optional implementation, the reader broadcasts the third identifier by using a select message. Therefore, the reader broadcasts the select message based on the time information corresponding to the third identifier, where the select message includes the third identifier.

A manner in which the reader broadcasts the third identifier based on the time information corresponding to the third identifier may be understood as that the reader simultaneously broadcasts the third identifier in the one or more identifiers supported by the reader, instead of broadcasting the one or more identifiers supported by the reader, in other words, instead of broadcasting all the identifiers supported by the reader. In this way, the reader can trigger the service inventory of the first service requester corresponding to the third identifier, instead of triggering service inventory of all service requesters within a coverage area of the reader, to reduce signaling overheads.

In an optional implementation, the third identifier corresponds to an ambient internet of things service, to be specific, the third identifier is an identifier associated with the ambient internet of things service of the first service requester. The ambient internet of things service may also be referred to as an ambient energy harvesting internet of things service, or may also be referred to as a passive internet of things service.

In an optional implementation, the ambient internet of things service of the first service requester includes a plurality of ambient internet of things services, the plurality of ambient internet of things services include a first ambient internet of things service, and the third identifier corresponds to the first ambient internet of things service (for example, a warehousing logistics service or an asset stocktaking service), that is, the third identifier is an identifier associated with the first ambient internet of things service of the first service requester.

Optionally, the reader may further broadcast storage area information, where the storage area information represents a storage area that stores the third identifier, so that the internet of things device matches the third identifier based on the storage area that stores the third identifier or determines, based on the third identifier, to initiate random access.

S902: A first internet of things device sends identification information to the reader, where the identification information identifies the first internet of things device. Correspondingly, the reader receives the identification information from the first internet of things device.

It may be understood that each internet of things device obtains configuration information in an initialization procedure, where the configuration information includes an identifier configured for the internet of things device and/or identification information of the internet of things device. For example, an internet of things device a obtains configuration information a in an initialization procedure, where the configuration information a includes one or more identifiers (for example, a CAG ID) that are configured for the internet of things device a and that is allowed by an access cell.

After the reader broadcasts the third identifier based on the time information of the third identifier, each internet of things device receives, by using a broadcast message (for example, in a blind detection manner), the third identifier broadcast by the reader. If the third identifier has been configured for an internet of things device, the internet of things device determines to initiate a random access procedure to the reader or perform a random access procedure with the reader.

The first internet of things device is an internet of things device for which the third identifier has been configured. Therefore, after receiving the third identifier, the first internet of things device performs the random access procedure with the reader. For the random access procedure, refer to the random access procedure in FIG. 7. Details are not described again. After randomly accessing the reader, the first internet of things device sends, to the reader, the identification information that identifies the first internet of things device. The identification information may be an identifier that identifies the first internet of things device, or may be other information that identifies the first internet of things device.

It can be learned that, after receiving the third identifier, the first internet of things device configured with the third identifier performs the random access procedure with the reader, and after the random access succeeds, reports, to the reader, the identification information that identifies the first internet of things device. Therefore, the identification information received by the reader is sent by the first internet of things device in response to the third identifier broadcast by the reader.

In an optional implementation, after randomly accessing the reader, the first internet of things device sends a radio access control (radio resource control, RRC) message to the reader, where the RRC message includes a non-access stratum (non-access stratum, NAS) message, and the NAS message includes the identification information that identifies the first internet of things device. Optionally, the NAS message may be a registration request message of the first internet of things device.

S903: The reader sends first information to the core network device, where the first information includes the identification information. Correspondingly, the core network device receives the first information sent by the reader.

In a possible implementation, that the core network device receives the first information sent by the reader includes: The core network device receives the identification information sent by the reader. That the core network device receives the identification information sent by the reader may be that the core network device receives the identification information forwarded by the reader. For example, the first internet of things device sends the identification information (that is, the identification information is from the first internet of things device) to the reader, and the core network device receives the identification information from the first internet of things device by using the first information from the reader.

After receiving the identification information from the first internet of things device, the reader sends the first information to the core network device, where the first information includes the identification information. This manner helps the core network device obtain the identification information reported by the first internet of things device.

In an optional implementation, the reader sends an N2 message (or referred to as a next generation application protocol (next generation application protocol, NGAP) message) to the core network device. The N2 message includes the identification information, that is, the first message is the N2 message.

In an optional implementation, the first information further includes the third identifier. It can be learned that the reader further sends the third identifier to the core network device by using the first information. This manner helps the core network device determine that the identification information that identifies the first internet of things device is reported by the first internet of things device in response to the third identifier sent by the reader, so that the core network device sends the identification information that identifies the first internet of things device to the first service requester corresponding to the third identifier, to complete the service inventory of the first service requester. In this application, reporting and sending may be replaced with each other.

In addition, in a manner in which the first information further includes the third identifier, if the third identifier is a CAG ID, the reader sends, to the core network device, the CAG ID responded by the first internet of things device, instead of sending all CAG IDs in a CAG ID list supported by the reader. This helps the core network device perform fine-grained access control on the first internet of things device based on the CAG ID responded by the first internet of things device.

In another optional implementation, the first information does not include the third identifier, and may include a timestamp at which the reader broadcasts the third identifier. The reader receives the identification information from the first internet of things device, and can learn that the identification information is sent by the first internet of things device in response to the third identifier. Therefore, when sending the first information to the core network device, the reader may include the timestamp for broadcasting the third identifier in the first information. This manner helps the core network device determine, based on the timestamp at which the reader broadcasts the third identifier, that the received identification information is reported by the first internet of things device in response to the third identifier broadcast by the reader, so that the core network device sends the identification information to the first service requester corresponding to the third identifier, to complete the service inventory of the first service requester. In addition, in this manner, the reader does not need to modify the N2 message, so that modifications to a protocol can be reduced.

In a possible implementation, the core network device obtains the time information corresponding to the one or more first identifiers. The one or more first identifiers include the third identifier. For example, it may be understood as that the core network device obtains the time information corresponding to the third identifier. The core network device determines, based on the timestamp of the third identifier and the time information corresponding to the one or more first identifiers, that the received identification information is reported by the first internet of things device in response to the third identifier broadcast by the reader.

In still another optional implementation, the first information includes the third identifier and a timestamp at which the reader broadcasts the third identifier, so that the reader can determine, based on the third identifier and the timestamp at which the reader broadcasts the third identifier, the first service requester that manages the first internet of things device.

Optionally, the first message further includes location information of the first internet of things device. The location information of the first internet of things device may be one or more of a reader identifier (for example, a base station identifier or a terminal identifier), a cell identity, a CAG ID, and a radio access network node identifier (RAN node ID), or may be location information determined based on one or more information of the reader identifier, the cell identity, and the RAN node ID. The determined location information may be, for example, a longitude, a latitude, and a coordinate value of the first internet of things device.

S904: The core network device determines the first service requester that manages the first internet of things device.

In an optional implementation, when the first information includes the third identifier and/or the timestamp at which the reader broadcasts the third identifier, the first service requester is a service requester corresponding to the third identifier. Specifically, when the first information includes the third identifier, that the core network device determines the first service requester that manages the first internet of things device includes: obtaining one or more identifiers corresponding to each of one or more service requesters, where the one or more service requesters include the first service requester; and determining, from the one or more service requesters based on the third identifier and the one or more identifiers corresponding to each service requester, the first service requester that manages the first internet of things device. In this application, that the core network device determines the first service requester that manages the first internet of things device may be understood as that the core network device determines the first service requester corresponding to the first internet of things device.

It can be learned that when the first information includes the third identifier, the core network device determines, based on the one or more identifiers corresponding to each of the one or more service requesters, the service requester corresponding to the third identifier, and the service requester corresponding to the third identifier is the first service requester that manages the first internet of things device.

Optionally, when the first information includes the timestamp at which the reader broadcasts the third identifier, that the core network device determines the first service requester that manages the first internet of things device includes: obtaining one or more identifiers corresponding to each of one or more service requesters, and time information corresponding to each of the one or more identifiers corresponding to each service requester; determining the third identifier based on the timestamp and the time information corresponding to each identifier; and determining, from the one or more service requesters based on the third identifier and the one or more identifiers corresponding to each service requester, the first service requester that manages the first internet of things device.

That the core network device obtains the one or more identifiers corresponding to each of the one or more service requesters, and the time information corresponding to each of the one or more identifiers corresponding to each service requester may be: receiving, from the reader, the one or more identifiers corresponding to each of the one or more service requesters and the time information corresponding to each of the one or more identifiers corresponding to each service requester; receiving, from each of the one or more service requesters, the one or more identifiers and the time information corresponding to each of the one or more identifiers; or receiving, from another core network device or a network management system, the one or more identifiers and the time information corresponding to each of the one or more identifiers. An obtaining manner of the core network device is not limited in embodiments of this application.

It can be learned that when the first information includes the timestamp at which the reader broadcasts the third identifier, the core network device determines, based on the timestamp, the third identifier responded by the first internet of things device, so that the service requester corresponding to the third identifier is the first service requester that manages the first internet of things device.

Optionally, when the first information includes the third identifier and the timestamp at which the reader broadcasts the third identifier, the core network device determines, based on the third identifier and the timestamp at which the reader broadcasts the third identifier, the first service requester that manages the first internet of things device. For a determining manner, refer to the foregoing manner based on the third identifier or based on the timestamp at which the reader broadcasts the third identifier. Details are not described again.

In this application, the timestamp may be understood as moment information, for example, may represent time information for action execution.

In still another optional implementation, when the first information neither includes the third identifier nor includes the timestamp at which the reader broadcasts the third identifier, the core network device determines, based on time information corresponding to each of one or more identifiers corresponding to each service requester and time at which the identification information is received, that the first internet of things device responds to the third identifier broadcast by the reader. Therefore, the core network device determines, based on the third identifier broadcast by the reader and one or more identifiers of each of the one or more service requesters, the first service requester that manages the first internet of things device.

It may be understood that time information corresponding to each of the one or more identifiers corresponding to each service requester varies, and time information corresponding to the identifiers corresponding to the plurality of service requesters also varies. Therefore, the reader broadcasts the one or more identifiers in different time periods or at different time, in other words, time at which the reader broadcasts the one or more identifiers does not overlap. Further, the core network device may determine, based on the time at which the identification information is received and the time information corresponding to each of the one or more identifiers, an identifier corresponding to time information that is earlier than the time at which the identification information is received and that is closest to the time at which the identification information is received as the third identifier responded by the first internet of things device. Further, the core network device determines, based on the third identifier and the one or more identifiers of each of the one or more service requesters, the first service requester that manages the first internet of things device.

Optionally, the core network device obtains the one or more identifiers corresponding to each of the one or more service requesters, and the time information corresponding to each of the one or more identifiers corresponding to each service requester. In an optional implementation, that the core network device obtains the one or more identifiers corresponding to each of the one or more service requesters, and the time information corresponding to each of the one or more identifiers corresponding to each service requester includes: receiving, from the reader, the one or more identifiers corresponding to each of the one or more service requesters and the time information corresponding to each of the one or more identifiers corresponding to each service requester.

In still another optional implementation, that the core network device determines the first service requester that manages the first internet of things device includes: determining, based on subscription information of the first internet of things device, the first service requester that manages the first internet of things device, where the subscription information includes an association relationship between the first internet of things device and the first service requester. It can be learned that when the subscription information of the first internet of things device includes the correspondence between the first internet of things device and the first service requester, the core network device may determine, based on the subscription information of the first internet of things device, the first service requester that manages the first internet of things device.

In an optional implementation, the first information includes the third identifier. Before determining the first service requester that manages the first internet of things device, the core network device further performs access control on the first internet of things device based on the third identifier and an allowed first identifier list configured for the first internet of things device. When the allowed first identifier list configured for the first internet of things device includes the received third identifier, the core network device allows the first internet of things device to access a network through a cell corresponding to the third identifier.

In an optional implementation, when the first information includes the third identifier, and the third identifier is a CAG ID, before determining the first service requester that manages the first internet of things device, the core network device further performs access control on the first internet of things device based on the CAG ID and an allowed CAG ID list configured for the first internet of things device. When the allowed CAI ID list configured for the first internet of things device includes the received CAG ID, the core network device allows the first internet of things device to access a network through a cell corresponding to the CAG ID.

Optionally, when the core network device allows the first internet of things device to access the network through the cell corresponding to the received CAG ID, the core network device may further send response information to the first internet of things device through the reader, where the response information may be a registration accept message. Therefore, the first internet of things device learns, by using the response information, that the first internet of things device can access the network through the cell corresponding to the responded CAG ID.

It can be learned that the first information further includes the third identifier, and the third identifier is the CAG ID. When the CAG ID is configured for the first internet of things device, the core network device allows the first internet of things device to access the network through the cell corresponding to the CAG ID. In this manner, the core network device performs access control on the first internet of things device based on the CAG ID responded by the first internet of things device, so that accuracy of the access control can be improved. In addition, when the third identifier is the CAG ID, the reader may trigger the service inventory of the first service requester based on a CAG ID mechanism, to reduce modifications to the network.

S905: The core network device sends the identification information to the first service requester. Correspondingly, the first service requester receives the identification information from the core network device.

After determining the first service requester that manages the first internet of things device, the core network device sends, to the first service requester, the identification information that identifies the first internet of things device, to complete the service inventory of the first service requester, in other words, complete inventory for a service associated with the third identifier.

In an optional implementation, when the first information further includes the location information of the first internet of things device, the core network device further sends the location information of the first internet of things device to the first service requester, so that the first service requester obtains a location of the first internet of things device.

In embodiments of this application, the reader broadcasts the third identifier based on the time information of the third identifier. In response to the third identifier broadcast by the reader, the first internet of things device configured with the third identifier reports, to the reader after performing random access to the reader, the identification information that identifies the first internet of things device. Therefore, the reader reports, to the core network device, the identification information that identifies the first internet of things device. After receiving the identification information, the core network device determines the first service requester that manages the first internet of things device, and sends the identification information to the first service requester, to implement the service inventory of the first service requester. It can be learned that the reader implements the service inventory of the first service requester by broadcasting, in a specific time period, the third identifier corresponding to the first service requester. Compared with that the reader triggers the service inventory of all the service requesters within the coverage area of the reader by broadcasting an identifier list supported by the reader, this manner can reduce signaling overheads.

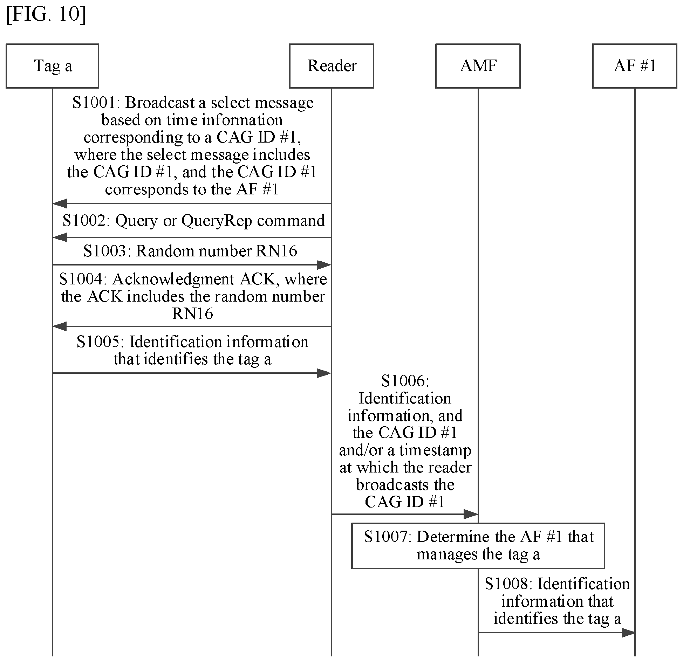

In FIG. 10, an example in which the first internet of things device is a tag a, the core network device includes an AMF, the first service requester is an AF #1, and the third identifier is a CAG ID #1 is used for describing the communication method 200 in detail. As shown in FIG. 10, a procedure of interaction between the tag a, the reader, the AMF, and the AF #1 includes but is not limited to the following steps.

S1001: The reader broadcasts a select message based on time information corresponding to the CAG ID #1, where the select message includes the CAG ID #1, and the CAG ID #1 corresponds to the AF #1.

Optionally, the select message further includes storage area information, and the storage area information represents a storage area that stores the CAG ID #1. This manner helps the tag determine the CAG ID #1 based on the storage area information.

Optionally, before broadcasting the select message, the reader obtains one or more CAG IDs corresponding to the AF #1, and time information corresponding to each of the one or more CAG IDs, where the one or more CAG IDs include the CAG ID #1. Therefore, the reader broadcasts the CAG ID #1 by broadcasting the select message based on the time information corresponding to the CAG ID #1.

In addition, the CAG ID #1 is one of one or more CAG IDs supported by the reader. Therefore, the reader broadcasts one of the one or more CAG IDs supported by the reader, instead of all CAG IDs of the one or more CAG IDs supported by the reader. In this way, the reader can trigger service inventory of a service requester (namely, the AF #1) corresponding to the CAG ID #1, instead of triggering service inventory of all service requesters within a coverage area of the reader, to reduce signaling overheads.

S1002: The reader sends a Query command or a QueryRep command to the tag a.

It may be understood that the reader sends the Query command or the QueryRep command for a plurality of times.

S1003: The tag a sends a random number RN16 to the reader. Correspondingly, the reader receives the random number RN16 from the tag a.

It may be understood that, after receiving the CAG ID #1 broadcast by the reader, the tag a configured with the CAG ID #1 generates a random number. Each time the tag a receives the Query command or the QueryRep command, the generated random number is decreased by one. When a value of the generated random number is 0, the tag a sends a 16-bit random number, that is, sends a random number RN16 to the reader.

S1004: The reader sends an acknowledgment ACK to the tag a, where the ACK includes the random number RN16. Correspondingly, the tag a receives the ACK from the reader.

It may be understood that, after receiving the random number RN16 from the tag a, the reader feeds back, to the tag, the ACK carrying the random number RN16.

S1005: The tag a sends, to the reader, identification information that identifies the tag a, where the tag a is a tag configured with the CAG ID #1. Correspondingly, the reader receives the identification information from the tag a.

If the tag a determines that the random number RN16 included in the ACK from the reader is the random number RN16 sent by the tag a to the reader, the tag a sends, to the reader, the identification information that identifies the tag a. It can be learned that the identification information that identifies the tag a is sent by the tag a in response to the CAG ID #1 broadcast by the reader.

In an optional implementation, the tag a sends an RRC message to the reader, where the RRC message includes the identification information that identifies the tag a. Optionally, the RRC message includes a NAS message, and the NAS message includes the identification information that identifies the tag a. Optionally, the NAS message may be a registration request message of the tag a.

S1006: The reader sends, to the AMF, the identification information, and the CAG ID #1 and/or a timestamp at which the reader broadcasts the CAG ID #1. Correspondingly, the AMF receives the identification information, and the CAG ID #1 and/or the timestamp at which the reader broadcasts the CAG ID #1 that are sent by the reader.

In an optional implementation, the reader sends an N2 message (or referred to as an NGAP message) to the AMF, where the N2 message includes the identification information that identifies the tag a, and the CAG ID #1 and/or the timestamp at which the reader broadcasts the CAG ID #1, where the identification information that identifies the tag a is from the tag a.

The CAG ID #1 is one of the one or more CAG IDs supported by the reader. It can be learned that the reader sends, to the AMF, the CAG ID #1 in the one or more CAG IDs supported by the reader instead of the one or more CAG IDs supported by the reader. Therefore, the reader can perform fine-grained access control on the tag a based on the CAG ID #1.

It may be understood that, after receiving the identification information from the tag a, the reader sends, to the AMF, the identification information, and the CAG ID #1 responded by the tag a or the timestamp at which the reader broadcasts the CAG ID #1, so that the AMF can determine that the identification information is reported by the tag a in response to the CAG ID #1 broadcast by the reader.

S1007: The AMF determines the AF #1 that manages the tag a.

In an optional implementation, when the AMF receives the CAG ID #1 from the reader, the AMF determines, based on the CAG ID #1 and one or more CAG IDs corresponding to each of one or more AFs, the AF #1 corresponding to the CAG ID #1, where the AF #1 corresponding to the CAG ID #1 is the AF #1 that manages the tag a.

In another optional implementation, when the AMF receives, from the reader, the timestamp at which the reader broadcasts the CAG ID #1, the AMF determines, based on the timestamp at which the reader broadcasts the CAG ID #1 and time at which the identification information is received, that the identification information is reported by the tag a in response to the CAG ID #1. Further, the reader determines, based on the CAG ID #1 and the one or more CAG IDs corresponding to each of the one or more AFs, the AF #1 corresponding to the CAG ID #1, where the AF #1 corresponding to the CAG ID #1 is the AF #1 that manages the tag a.

In still another optional implementation, the AMF obtains subscription information of the tag a identified by the identification information. If the subscription information of the tag a includes the AF #1 associated with the tag a, the AMF directly determines, based on the subscription information of the tag a, that an AF that manages the tag a is the AF #1.

Optionally, before determining the AF #1 that manages the tag a, the AMF performs access control on the tag a. Optionally, the AMF interacts with a UDM to perform access control on the tag a. If the CAG ID #1 is a CAG ID allowed by the tag a, the AMF allows the tag a to access a network through a cell corresponding to the CAG ID #1, for example, access a cell that supports an ambient internet of things service/access technology type. In this manner, the AMF performs access control on the tag a based on the CAG ID #1 responded by the tag a, instead of performing access control on the tag a based on all the CAG IDs supported by the reader, so that accurate access control on the tag a can be implemented.

Optionally, after allowing the tag a to access an ambient internet of things through the cell corresponding to the CAG ID #1, the AMF further sends response information, for example, may be a registration receive message, to the tag a through the reader, to notify that the tag a can access the network through the cell corresponding to the CAG ID #1.

S1008: The AMF sends, to the AF #1, the identification information that identifies the tag a.

The AMF sends, to the AF #1, the identification information that identifies the tag a, to implement the service inventory of the AF #1, and specifically implement inventory for a service that is associated with the CAG ID #1 and that is in the AF #1. It can be learned that the reader may implement service inventory for a specific service in AF #1 by broadcasting the CAG ID #1.

Optionally, if the reader further sends location information of the tag a to the AMF, the AMF may further send the location information of the tag a to the AF #1. For a specific form of the location information of the tag a, refer to the descriptions in the foregoing communication method 200. Details are not described again.

It can be learned that, after the reader broadcasts the CAG ID #1, the tag a configured with the CAG ID #1 randomly accesses the reader, and reports, to the reader, the identification information that identifies the tag a. Therefore, the reader sends the identification information and the CAG ID #1 to the AMF. The AMF determines, based on the CAG ID #1, the AF #1 that manages the tag a. Further, the AMF sends, to the AF #1, the identification information that identifies the tag a, so that the service inventory of the AF #1 can be implemented. In addition, the AF #1 may further perform fine-grained access control on the tag a based on the CAG ID #1, in other words, can determine that the tag a can access the network based on the cell corresponding to the CAG ID #1.

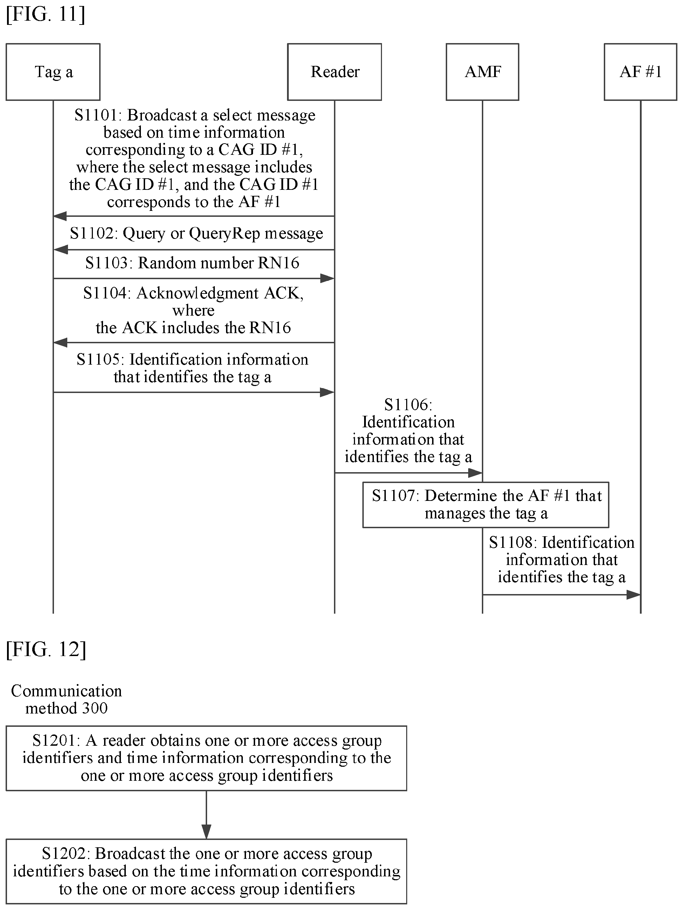

FIG. 11 is an interaction diagram of another communication method. A difference between the communication method shown in FIG. 11 and the communication method shown in FIG. 10 lies in that after receiving, from a tag a, identification information that identifies the tag a, a reader sends the identification information to an AMF, but does not send a CAG ID #1 responded by the tag a, and does not send a timestamp at which the reader broadcasts the CAG ID #1. In this manner, the reader may not modify an N2 message, so that modifications to a protocol can be reduced.

In addition, the AMF obtains one or more CAG IDs corresponding to each of one or more service requesters and time information corresponding to each of the one or more CAG IDs in an initialization procedure. Therefore, after receiving the identification information from the reader, the AMF determines, based on the time information corresponding to each of the one or more CAG IDs corresponding to each service requester, that the identification information is reported by the tag a in response to the CAG ID #1 broadcast by the reader. Further, the AMF determines, based on the CAG ID #1, an AF #1 that manages the tag a, and sends the identification information to the AF #1, to implement service inventory of the AF #1. In addition, the AMF may further perform fine-grained access control on the tag a based on the CAG ID #1.

It can be learned that a difference between S1101 to S1108 in FIG. 11 and S1001 to S1008 in FIG. 10 lies in that, in S1106, the reader sends, to the AMF, the identification information that identifies the tag a. In other words, in S1106, the reader does not send the identification information, and the CAG ID #1 or the timestamp at which the reader broadcasts the CAG ID #1. In addition, in S1107, that the AMF determines the AF #1 that manages the tag a is specifically: determining, based on time information corresponding to one or more identifiers of each of the one or more service requesters and time at which the identification information is received, the CAG ID #1 responded by the tag a, and determining, based on the CAG ID #1, the AF #1 that manages the tag a. However, in S1007, the AMF directly determines, based on the CAG ID #1 or the timestamp at which the reader broadcasts the CAG ID #1, the AF #1 that manages the tag a.

FIG. 12 is an interaction diagram of still another communication method 300. As shown in FIG. 12, the communication method includes but is not limited to the following steps.

S1201: A reader obtains one or more access group identifiers and time information corresponding to the one or more access group identifiers.

The time information corresponding to the one or more access group identifiers may be time information corresponding to a part or all of the one or more access group identifiers. The one or more access group identifiers may be access identifiers used when an internet of things device accesses a cell, for example, may be the foregoing CAG IDs. This is not limited in this embodiment of this application. In addition, the access group identifier may also be referred to as a group access identifier, or may be another identifier used to distinguish between different terminals that perform access procedures. This is not limited in this embodiment of this application.

In addition, a difference between the one or more access group identifiers and the foregoing first identifier lies in that: the access group identifier in the one or more access group identifiers may correspond to a service requester, or may not correspond to the service requester, in other words, there is or there is no association relationship between the access group identifier and the service requester. In other words, a relationship between the access group identifier and the service requester is not limited in this embodiment of this application.

The time information corresponding to the one or more access group identifiers is similar to the foregoing time information corresponding to the one or more first identifiers. For example, the time information corresponding to the access group identifier may be a broadcast time requirement, namely, a time requirement for broadcasting the access group identifier. Details are not described again. Specific forms of time information corresponding to different access group identifiers in the one or more access group identifiers may be the same or may be different. This is not limited in this embodiment of this application.

In an optional implementation, different access group identifiers in the one or more access group identifiers correspond to different time information, so that broadcast time of the different access group identifiers in the one or more access group identifiers varies. This manner helps the reader broadcast the different access group identifiers in the one or more access group identifiers in different time periods, and further helps internet of things devices that obtain the different access group identifiers initiate registration procedures to a network in different time periods, to reduce network congestion.

In this embodiment of this application, the registration procedure may be replaced with an access procedure, and a procedure used to enable a terminal to access a network may be considered as a registration procedure or an access procedure.

In an optional implementation, that the reader obtains the one or more access group identifiers and the time information corresponding to the one or more access group identifiers includes: receiving, from a core network device, the one or more access group identifiers and the time information corresponding to the one or more access group identifiers. In a possible implementation, the core network device determines the one or more access group identifiers and the time information corresponding to the one or more access group identifiers, to ensure that a quantity of internet of things devices that perform access at the same time does not exceed a specific threshold, so that a plurality of internet of things devices can perform access at different time based on different access group identifiers, to reduce network congestion. Further, the core network device sends, to the reader, the one or more access group identifiers and the time information of the one or more access group identifiers that are determined, so that the reader broadcasts different access group identifiers at different time, to facilitate access of different core network devices at different time or in different time periods.

In another optional implementation, the one or more access group identifiers and the time information corresponding to the one or more access group identifiers are configured for the reader. Therefore, that the reader obtains the one or more access group identifiers and the time information corresponding to the one or more access group identifiers may be understood as: obtaining, by using configuration information, the one or more access group identifiers and the time information corresponding to the one or more access group identifiers. The configuration information may be preconfigured by the core network device for the reader.

S1202: The reader broadcasts the one or more access group identifiers based on the time information corresponding to the one or more access group identifiers.

In an optional implementation, that the reader broadcasts the one or more access group identifiers based on the time information corresponding to the one or more access group identifiers may be understood as that the reader broadcasts a part or all of the access group identifiers based on time information corresponding to the part or all of the one or more access group identifiers.

Optionally, that the reader broadcasts the one or more access group identifiers based on the time information corresponding to the one or more access group identifiers may also be understood as that for any one of the one or more access group identifiers, the reader broadcasts the access group identifier based on time information corresponding to the access group identifier.

For example, a first TAI is a TAI #1, the plurality of access group identifiers include an access group identifier 1 and an access group identifier 2, time information corresponding to the access group identifier 1 is a moment t1, and time information corresponding to the access group identifier 2 is a moment t2. In this case, the reader broadcasts the access group identifier 1 at the moment t1, and the reader broadcasts the access group identifier 2 at the moment t2.

It can be learned that the reader may broadcast different access group identifiers at different time or in different time periods based on time information corresponding to the different access group identifiers in the one or more access group identifiers, so that a plurality of internet of things devices initiate registration procedures to a network at different time or in different time periods based on access group identifiers obtained by the plurality of internet of things devices. Compared with that the plurality of internet of things devices initiate the registration procedures to the network at the same time or in a same time period, this manner can reduce the internet of things devices that initiate the registration procedures to the network at the same time or in the same time period, to reduce network congestion.

In addition, when the time information corresponding to the access group identifier is in different forms, for an implementation in which the reader broadcasts the access group identifier based on the time information corresponding to the access group identifier, refer to the implementation in which, when the time information corresponding to the first identifier is in different forms, the reader broadcasts the first identifier based on the time information corresponding to the first identifier in S802. Details are not described again.

In an optional implementation, when broadcasting the one or more access group identifiers based on the time information corresponding to the one or more access group identifiers, the reader further broadcasts the first TAI, so that a plurality of internet of things devices moving from other TAIs to the first TAI can initiate registration procedures to a network at different time or in different time periods based on access group identifiers obtained by the plurality of internet of things devices. Compared with that the plurality of internet of things devices moving from the other TAIs to the first TAI initiate the registration procedures to the network at the same time or in a same time period, this manner can reduce network congestion.

The first TAI may be a tracking area identity corresponding to the reader. In a possible implementation, another device (for example, a core network device) configures, based on a physical location of the reader or a coverage area of the reader, a tracking area identity corresponding to the physical location of the reader or the coverage area of the reader. In another possible implementation, the tracking area is a logical tracking area, is used to distinguish between different readers, and is irrelevant to an actual physical deployment location.

For example, the reader broadcasts an access group identifier 1 and a TAI #1 at a moment t1 indicated by time information corresponding to the access group identifier 1, and broadcasts an access group identifier 2 and the TAI #1 at a moment t2 indicated by time information corresponding to the access group identifier 2. It can be learned that because the TAI is periodically broadcast, and is irrelevant to broadcasting of the access group identifier, the reader broadcasts the TAI #1 at both the moment t1 and the moment t2. However, at different moments, the access group identifiers broadcast by the reader are different.

Optionally, the foregoing TAI may be replaced with other identification information, for example, identification information that is set for an ambient IoT device and that is used to perform mobility management, or the TAI in this application may be replaced with another identifier used to distinguish between different areas or different logical areas. This is not limited in this application.

Optionally, when broadcasting an access group identifier and the first TAI, the reader may further broadcast other system information, for example, a PLMN ID.

In this embodiment of this application, the reader broadcasts the one or more access group identifiers based on the time information corresponding to the one or more access group identifiers, so that the plurality of internet of things devices initiate the registration procedures to the network at different time or in different time periods based on the access group identifiers obtained by the plurality of internet of things devices. Compared with that the plurality of internet of things devices initiate the registration procedures to the network at the same time or in a same time period, this manner can reduce network congestion.

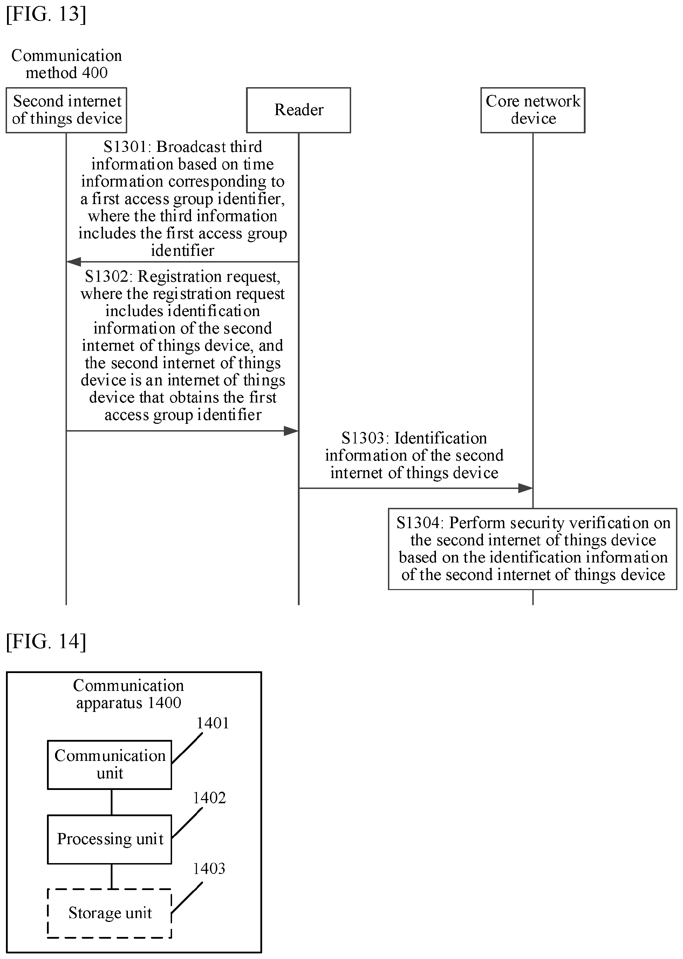

Embodiments of this application further provide a communication method 400 for broadcasting any one of one or more access group identifiers by a reader. For ease of description, in the communication method 400, an example in which a first access group identifier is one of the one or more access group identifiers is used for description. FIG. 13 is an interaction diagram of the communication method 400. The communication method 400 is described from a perspective of interaction between a reader, an internet of things device, and a core network device. The communication method 400 includes but is not limited to the following steps.

S1301: The reader broadcasts third information based on time information corresponding to the first access group identifier, where the third information includes the first access group identifier.

In an optional implementation, before performing S1301, the reader obtains the one or more access group identifiers and time information corresponding to the one or more access group identifiers, where the one or more access group identifiers include the first access group identifier. For an implementation, refer to the descriptions in S1201. Details are not described again.

The first access group identifier is any one of the one or more access group identifiers. That the reader broadcasts the third information based on the time information corresponding to the first access group identifier may be understood as that for any one of the one or more access group identifiers, the reader broadcasts the third information based on the time information corresponding to the access group identifier.

It can be learned that the reader broadcasts one of the one or more access group identifiers at the same time or in a same time period, instead of broadcasting all the access group identifiers. This helps trigger an internet of things device that obtains the first access group identifier currently broadcast by the reader to initiate an access procedure, instead of initiating access procedures by a plurality of internet of things devices at the same time or in a same time period, to avoid network congestion.

In an optional implementation, the third information further includes a first TAI corresponding to the reader. In other words, when broadcasting the first access group identifier based on the time information corresponding to the first access group identifier, the reader further broadcasts the first TAI. For example, the one or more access group identifiers include an access group identifier a and an access group identifier b. The reader broadcasts third information #1 based on time information corresponding to the access group identifier a, and broadcasts third information #2 based on time information corresponding to the access group identifier b. The third information #1 includes the access group identifier a and the first TAI, and the third information #2 includes the access group identifier b and the first TAI.

It can be learned that, when the reader broadcasts one of the one or more access group identifiers at the same time or in a same time period, the first TAI may be further broadcast. This helps trigger an internet of things device that moves from another TAI to the first TAI and that stores the first access group identifier currently broadcast by the reader to initiate an access procedure, instead of initiating, by a large quantity of internet of things devices when moving from other TAIs to the first TAI, access procedures at the same time or in a same time period, to avoid network congestion.

Optionally, when broadcasting the third information, the reader may further broadcast other system information, for example, a PLMN ID. Optionally, the third information may further include other system information. For example, the third information includes a PLMN ID.

S1302: A second internet of things device sends a registration request to the reader, where the registration request includes identification information of the second internet of things device, and the second internet of things device is an internet of things device that obtains the first access group identifier.

In an optional implementation, the second internet of things device is an internet of things device that moves from another TAI to the first TAI. Therefore, when entering a range corresponding to the first TAI, the second internet of things device does not obtain the first TAI, and needs to initiate a registration procedure.

Optionally, that the second internet of things device obtains the first access group identifier may be understood as that the first access group identifier is preconfigured for the second internet of things device.

Optionally, the first access group identifier is not preconfigured for the second internet of things device, and the first access group identifier obtained by the second internet of things device is sent by the core network device (for example, an AMF) to the second internet of things device through the reader. In a possible implementation, the core network device determines, based on a quantity of currently accessed internet of things devices that are managed/served by the core network device, whether to send an access group identifier to the second internet of things device. In another possible implementation, the core network device determines, based on one or more currently accessed internet of things devices and an access group corresponding to an internet of things device managed/served by the core network device, to send an access group identifier to the second internet of things device. For example, when there is a small quantity of currently accessed internet of things devices and group access does not need to be performed, the core network device determines that an access group identifier does not need to be sent to the second internet of things device; or when there is a large quantity of currently accessed internet of things devices and group access needs to be performed, the core network device determines to send an appropriate access group identifier (for example, the first access group identifier) to the second internet of things device, so that a quantity of internet of things devices corresponding to the access group identifier is within an appropriate range, to reduce network congestion.

Therefore, when receiving the first access group identifier (and optionally, the first TAI) broadcast by the reader, the second internet of things device that obtains the first access group identifier determines that the second internet of things device can initiate a registration procedure to a network, for example, send a registration request to the reader, to request to access the network.

For example, a TAI (for example, a TAI #1) obtained by the second internet of things device does not include a TAI (TAI #2) currently broadcast by a reader/writer, indicating that the internet of things device moves out of a previous area and enters a new area. In this case, the second internet of things device needs to re-access the network in the new area, to perform mobility management. The second internet of things device further stores an access group identifier 2. The reader broadcasts third information #1 at a moment t1, and broadcasts third information #2 at a moment t2, where the third information #1 includes the TA1#2 and an access group identifier 1, and the third information #2 includes the TAI #2 and the access group identifier 2. The second internet of things device receives, at the moment t1, the third information #1 broadcast by the reader. Because an access group identifier (the access group identifier 2) stored in the second internet of things device is not the access group identifier 1 in the third information #1, the second internet of things device does not initiate a registration procedure to the network at the moment t1. The second internet of things device receives, at the moment t2, the third information #2 broadcast by the reader. Because an access group identifier (the access group identifier 2) stored in the second internet of things device is the same as the access group identifier in the third information #2, the second internet of things device initiates a registration procedure to the network, to request to access the network. It can be learned that the second internet of things device moves to the TAI currently broadcast by the reader, and initiates the registration procedure to the network only when the obtained access group identifier is the same as the access group identifier broadcast by the reader, so that different internet of things devices can request access to the network at different time or in different time periods, to reduce network congestion.

S1303: The reader sends the identification information of the second internet of things device to the core network device.

The identification information of the second internet of things device identifies the second internet of things device. For example, the identification information of the second internet of things device is a device identifier of the second internet of things device.

Optionally, after receiving the registration request from the second internet of things device, the reader sends the identification information of the second internet of things device to the core network device, so that the core network device performs security verification on the second internet of things device, to determine whether to allow the second internet of things device to access the network.

S1304: The core network device performs security verification on the second internet of things device based on the identification information of the second internet of things device.

For an implementation of S1304, refer to the security procedure, for example, authentication performed through interaction between the terminal device, the AMF, the AUSF, and the UDM in FIG. 6. Details are not described again.

Optionally, after the security verification performed by the core network device on the second internet of things device succeeds, the core network device may further send a NAS message to the second internet of things device through the reader. The NAS message includes a registration accept message sent by an AMF to a terminal device. For the registration accept message, refer to FIG. 6. Details are not described again.

In an optional implementation, the core network device (for example, the AMF) may send TAI update information to the second internet of things device, where the TAI update information includes an identifier of the first TAI. Therefore, when the second internet of things device is still in an area corresponding to the first TAI, the second internet of things device does not need to frequently initiate the registration procedure to the network, but initiates the registration procedure to the network only after the second internet of things device moves out of the area corresponding to the first TAI, to reduce power consumption of the second internet of things device.

Optionally, the core network device (for example, the AMF) may determine, based on a quantity of currently accessed internet of things devices that are managed/served by the AMF, whether to remove or update the access group identifier for the second internet of things device. If the access group identifier needs to be updated, the core network device sends a new access group identifier to the second internet of things device.

It can be learned that in this embodiment of this application, the reader broadcasts the first access group identifier based on the time information corresponding to the first access group identifier. Therefore, the second internet of things device that receives the first access group identifier broadcast by the reader and that obtains the first access group identifier initiates the registration procedure to the network, to request to access the network. In this manner, internet of things devices that obtain different access group identifiers can access the network in batches at different moments, so that these internet of things devices do not simultaneously initiate a large quantity of access procedures, to avoid network congestion.

Optionally, when broadcasting the first access group identifier based on the time information corresponding to the first access group identifier, the reader further broadcasts the first TAI corresponding to the reader, so that the second internet of things device that moves from the another TAI to the first TAI, receives the first access group identifier broadcast by the reader, and that obtains the first access group identifier can initiate the registration procedure to the network to access the network. In this manner, when a large quantity of internet of things devices move from other TAIs to the first TAI, internet of things devices that obtain different access group identifiers may access the network in batches at different moments, so that the internet of things devices do not simultaneously initiate a large quantity of access procedures, to avoid network congestion.

For the technical solutions described above, the following further describes corresponding apparatus implementation solutions.

To implement the functions in the foregoing methods provided in embodiments of this application, the reader, the core network device, and the first service requester may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

As shown in FIG. 14, an embodiment of this application provides a communication apparatus 1400. The communication apparatus 1400 may be a component (for example, an integrated circuit or a chip) of a reader, may be a component (for example, an integrated circuit or a chip) of a core network device, or may be a component (for example, an integrated circuit or a chip) of a first service requester. Alternatively, the communication apparatus 1400 may be another communication unit, configured to implement the methods in the method embodiments of this application. The communication apparatus 1400 may include a communication unit 1401 and a processing unit 1402. Optionally, a storage unit 1403 may be further included.

In a possible design, one or more units in FIG. 14 may be implemented by using one or more processors, implemented by using one or more processors and memories, implemented by using one or more processors and transceivers, or implemented by using one or more processors, memories, and transceivers. This is not limited in embodiments of this application. The processor, the memory, and the transceiver may be disposed separately, or may be integrated.

The communication apparatus 1400 has a function of implementing the reader or a function of implementing the core network device described in embodiments of this application. For example, the communication apparatus 1400 includes a corresponding module, unit, or means (means) used by a reader to perform the steps related to the site in the foregoing method embodiments. The function, the unit, or the means (means) may be implemented by using software, may be implemented by using hardware, may be implemented by using hardware executing corresponding software, or may be implemented by using a combination of software and hardware. For details, further refer to the corresponding descriptions in the foregoing corresponding method embodiments.

In a possible design, the communication apparatus 1400 may include the processing unit 1402 and the communication unit 1401. The apparatus is applied to a reader, and the communication unit 1401 is configured to send and receive signaling/a signal.

The processing unit is configured to obtain one or more first identifiers and time information corresponding to each of the one or more first identifiers, where the one or more first identifiers correspond to a first service requester.

The processing unit is further configured to broadcast the one or more first identifiers based on the time information corresponding to each of the one or more first identifiers.

In addition, for another optional implementation of the communication apparatus 1400, refer to related content of the foregoing method embodiments. Details are not described herein again.

This embodiment of this application and the foregoing method embodiments are based on a same concept, and bring same technical effects. For a specific principle, refer to the descriptions of the foregoing embodiments. Details are not described again.

In another possible design, the communication apparatus 1400 may include the processing unit 1402 and the communication unit 1401. The apparatus is applied to a core network device.

The communication unit 1401 is configured to receive first information sent by a reader, where the first information includes identification information, and the identification information identifies a first internet of things device.

The processing unit 1402 is configured to determine a first service requester that manages the first internet of things device.

The communication unit 1401 is further configured to send the identification information to the first service requester.

In addition, for another optional implementation of the communication apparatus 1400, refer to related content of the foregoing method embodiments. Details are not described herein again.

This embodiment of this application and the foregoing method embodiments are based on a same concept, and bring same technical effects. For a specific principle, refer to the descriptions of the foregoing embodiments. Details are not described again.

In still another possible design, the communication apparatus 1400 may include the processing unit 1402 and the communication unit 1401, the apparatus is applied to a first service requester, and the processing unit 1402 is configured to process a signal/signaling.

The communication unit 1401 is configured to send one or more first identifiers corresponding to the first service requester, and time information corresponding to each of the one or more first identifiers.

The communication unit 1401 is further configured to receive identification information, where the identification information identifies a first internet of things device, the identification information is sent by the first internet of things device in response to a third identifier broadcast by a reader, the third identifier is one of the one or more first identifiers, and the first internet of things device is an internet of things device managed by the first service requester.

In still another possible design, the communication apparatus 1400 may include the processing unit 1402 and the communication unit 1401, the apparatus is applied to a reader, and the communication unit 1401 is configured to send and receive signaling/a signal.

The processing unit 1402 is configured to obtain one or more access group identifiers and time information corresponding to the one or more access group identifiers.

The processing unit 1402 is further configured to broadcast the one or more access group identifiers based on the time information corresponding to the one or more access group identifiers.

In still another implementation, the communication apparatus 1400 includes the processing unit 1402 and the communication unit 1401, the apparatus is applied to an internet of things device, and the processing unit 1402 is configured to process a signal/signaling.

The communication unit 1401 is configured to receive a first access group identifier broadcast by a reader, where the communication apparatus is an internet of things device that obtains the first access group identifier.

The communication unit 1401 is further configured to send a registration request to the reader, where the registration request includes identification information of a second internet of things device.

In addition, for another optional implementation of the communication apparatus 1400, refer to related content of the foregoing method embodiments. Details are not described herein again.

This embodiment of this application and the foregoing method embodiments are based on a same concept, and bring same technical effects. For a specific principle, refer to the descriptions of the foregoing embodiments. Details are not described again.

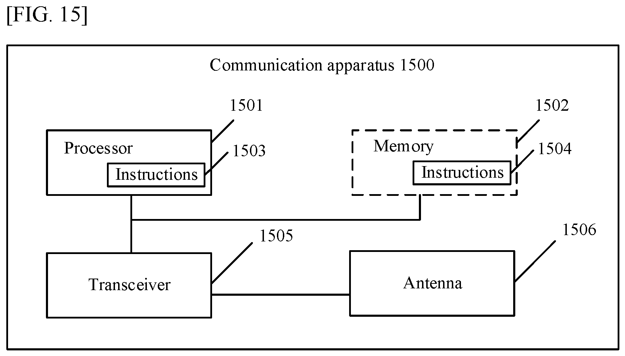

An embodiment of this application further provides a communication apparatus 1500. FIG. 15 is a diagram of a structure of the communication apparatus 1500. The communication apparatus 1500 may be a reader, or may be a chip, a chip system, a processor, or the like that supports the reader in implementing the foregoing method; may be a core network device, or may be a chip, a chip system, a processor, or the like that supports the core network device in implementing the foregoing method; or may be a first service requester, or may be a chip, a chip system, a processor, or the like that supports the first service requester in implementing the foregoing method. The apparatus may be configured to implement the method described in the foregoing method embodiments. For details, refer to the descriptions of the foregoing method embodiments.

The communication apparatus 1500 may include one or more processors 1501. The processor 1501 may be a general-purpose processor, a dedicated processor, or the like. For example, the processor may be a baseband processor, a digital signal processor, an application-specific integrated circuit, a field programmable gate array or another programmable logic device, a discrete gate or transistor logic device, a discrete hardware component, or a central processing unit (central processing unit, CPU). The baseband processor may be configured to process a communication protocol and communication data. The central processing unit may be configured to: control the communication apparatus (for example, a base station, a baseband chip, a terminal, a terminal chip, a distributed unit DU, or a central unit CU), execute a software program, and process data of the software program.

Optionally, the communication apparatus 1500 may include one or more memories 1502. The memory may store instructions 1504, and the instructions may be run on the processor 1501, so that the communication apparatus 1500 performs the method described in the foregoing method embodiments. Optionally, the memory 1502 may further store data. The processor 1501 and the memory 1502 may be disposed separately, or may be integrated together.

Optionally, the communication apparatus 1500 may further include a transceiver 1505 and an antenna 1506. The transceiver 1505 may be referred to as a transceiver unit, a transceiver device, a transceiver circuit, or the like, and is configured to implement a transceiver function. The transceiver 1505 may include a receiver and a transmitter. The receiver may be referred to as a receiving device, a receiver circuit, or the like, and is configured to implement a receiving function. The transmitter may be referred to as a transmitting device, a transmitter circuit, or the like, and is configured to implement a sending function.

In a possible design, the communication apparatus 1500 may be used for a reader. Specifically, the processor 1501 is configured to perform S801 and S802 in the communication method 100, S1201 and S1202 in the communication method 300, and S1301 in the communication method 400. The transceiver 1505 is configured to perform S901, S902, and S903 in the communication method 200, and S1302 and S1303 in the communication method 400.

In another possible design, the communication apparatus 1500 may be used for a core network device. Specifically, the processor 1501 is configured to perform S904 in the communication method 200 and S1304 in the communication method 400. The transceiver 1505 is configured to perform S903 and S905 in the communication method 200 and S1303 in the communication method 400.

In still another possible design, the communication apparatus 1500 may be used for a core network device. Specifically, the transceiver 1505 is configured to perform S905 in the communication method 200.

Optionally, the processor 1501 may store instructions 1503. The instructions 1503 are run on the processor 1501, so that the communication apparatus 1500 performs the methods described in the foregoing method embodiments. The instructions 1503 may be fixed in the processor 1501. In this case, the processor 1501 may be implemented by using hardware.

This embodiment of this application and the method embodiments shown in the communication method 100 to the communication method 400 are based on a same concept, and bring same technical effects. For a specific principle, refer to the descriptions of the embodiments shown in the communication method 100 to the communication method 400. Details are not described again.

An embodiment of this application further provides a computer-readable storage medium, configured to store computer software instructions. When the instructions are executed by a communication apparatus, a function in any one of the foregoing method embodiments is implemented.

An embodiment of this application further provides a computer program product, configured to store computer software instructions. When the instructions are executed by a communication apparatus, a function in any one of the foregoing method embodiments is implemented.

An embodiment of this application further provides a computer program. When the computer program is run on a computer, a function in any one of the foregoing method embodiments is implemented.

An embodiment of this application further provides a communication system. The system may include a reader and a core network device. In another possible design, the system may further include another device that interacts with the reader and the core network device, for example, further include an internet of things device and a service requester.

The terms "first", "second", and the like in the specification, claims, and accompanying drawings of embodiments of this application are used to distinguish between different objects, but are not used to describe a specific order. "First", "second", and the like are merely intended for a purpose of description, and shall not be understood as an indication or implication of relative importance or an implicit indication of a quantity of indicated technical features. Therefore, a feature limited by "first", "second", or the like may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In embodiments of this application, "at least one (item)" means one or more, "a plurality of" means two or more, and "and/or" is used to describe an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

In addition, in embodiments of this application, the word "example" or "for example" represents giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a reader, and the method comprises:
obtaining one or more first identifiers and time information corresponding to each of the one or more first identifiers, wherein the one or more first identifiers correspond to a first service requester; and
broadcasting the one or more first identifiers based on the time information corresponding to each of the one or more first identifiers.

2. The method according to claim 1, wherein after the broadcasting the one or more first identifiers, the method further comprises:
receiving identification information from a first internet of things device, wherein the identification information identifies the first internet of things device, and the first internet of things device is an internet of things device managed by the first service requester; and
sending first information to a core network device, wherein the first information comprises the identification information.

3. The method according to claim 1 or 2, wherein the obtaining the one or more first identifiers and the time information corresponding to each of the one or more first identifiers comprises:
receiving, from the core network device, the one or more first identifiers and the time information corresponding to each of the one or more first identifiers.

4. The method according to any one of claims 1 to 3, wherein the method further comprises:
obtaining one or more second identifiers and time information corresponding to each of the one or more second identifiers, wherein the one or more second identifiers correspond to a second service requester; and
broadcasting the one or more second identifiers based on the time information corresponding to each of the one or more second identifiers, wherein
the time information corresponding to the first identifier is different from the time information corresponding to the second identifier.

5. The method according to claim 2, wherein the first information further comprises a third identifier and/or a timestamp at which the reader broadcasts the third identifier, the third identifier is a first identifier in response to which the first internet of things device sends the identification information, and the third identifier is one of the one or more first identifiers.

6. The method according to claim 2 or 5, wherein the first information further comprises location information of the first internet of things device.

7. The method according to any one of claims 1 to 6, wherein different first identifiers in the one or more first identifiers correspond to different time information.

8. The method according to any one of claims 1 to 7, wherein the method further comprises:
broadcasting storage area information, wherein the storage area information represents a storage area that stores the one or more first identifiers.

9. The method according to any one of claims 1 to 8, wherein the time information comprises one or more of the following: sending time, a sending periodicity, valid time, a sending frequency, and a sending interval.

10. The method according to any one of claims 1 to 9, wherein the one or more first identifiers are closed access group identifiers.

11. The method according to any one of claims 1 to 10, wherein the one or more first identifiers correspond to an ambient internet of things service.

12. The method according to any one of claims 1 to 11, wherein the method further comprises:
obtaining second information, wherein the second information indicates to update the first identifier corresponding to the first service requester; and
updating, based on the second information, the first identifier corresponding to the first service requester.

13. The method according to any one of claims 1 to 11, wherein the one or more first identifiers are identifiers used by an internet of things device to access a cell, identifiers of the first service requester, identifiers of the service of the first service requester, or group identifiers.

14. A communication method, wherein the method is applied to a core network device, and the method comprises:
receiving first information sent by a reader, wherein the first information comprises identification information, and the identification information identifies a first internet of things device;
determining a first service requester that manages the first internet of things device; and
sending the identification information to the first service requester.

15. The method according to claim 14, wherein the first information further comprises a third identifier and/or a timestamp at which the reader broadcasts the third identifier, and the first service requester is a service requester corresponding to the third identifier.

16. The method according to claim 14, wherein the determining the first service requester that manages the first internet of things device comprises:
determining, based on subscription information of the first internet of things device, the first service requester that manages the first internet of things device, wherein
the subscription information comprises an association relationship between the first internet of things device and the first service requester.

17. The method according to claim 15, wherein before the determining the first service requester that manages the first internet of things device, the method further comprises:
allowing the first internet of things device to access a network through a cell corresponding to the third identifier.

18. The method according to claim 15 or 17, wherein the third identifier is a closed access group identifier.

19. The method according to claim 15 or 17, wherein the third identifier corresponds to an ambient internet of things service.

20. The method according to any one of claims 14 to 19, wherein the first information further comprises location information of the first internet of things device, and the method further comprises:
sending the location information of the first internet of things device to the first service requester.

21. The method according to any one of claims 14 to 20, wherein the third identifier is an identifier used by the internet of things device to access the cell, an identifier of the first service requester, an identifier of the service of the first service requester, or a group identifier.

22. A communication apparatus, wherein the communication apparatus comprises a module configured to perform the method according to any one of claims 1 to 13, or comprises a module configured to perform the method according to any one of claims 14 to 21.

23. A communication apparatus, wherein the communication apparatus comprises a processor, and the processor is configured to perform the method according to any one of claims 1 to 13, or is configured to perform the method according to any one of claims 14 to 21.

24. A communication system, comprising at least one of the following apparatuses: an apparatus configured to perform the method according to any one of claims 1 to 13, and an apparatus configured to perform the method according to any one of claims 14 to 21.

25. A computer-readable storage medium, wherein the computer-readable storage medium is configured to store instructions; and when the instructions are run on a computer, the method according to any one of claims 1 to 13 is performed, or the method according to any one of claims 14 to 21 is performed.

26. A computer program product comprising instructions, wherein when the computer program product runs on a computer, the method according to any one of claims 1 to 13 is performed, or the method according to any one of claims 14 to 21 is performed.
